# EUROPÄISCHE PATENTSCHRIFT

(11) **EP 1 141 038 B1**
(45) Veröffentlichungstag und Bekanntmachung des Hinweises auf die Patenterteilung: **25.02.2004**
(21) Anmeldenummer: 99961016.5
(22) Anmeldetag: 26.11.1999
(51) Int. Cl.: C08F 8/30, C08F 8/34, C08G 85/00

(54) **VERFAHREN ZUR HERSTELLUNG EINES POLYMEREN NETZWERKES**
METHOD OF PRODUCING A POLYMER NETWORK
PROCEDE DE PREPARATION D'UN RESEAU POLYMERE

(30) Priorität: 30.11.1998 DE 19855173; 21.06.1999 DE 19928236
(43) Veröffentlichungstag der Anmeldung: 10.10.2001
(73) Patentinhaber: instrAction GmbH, 67059 Ludwigshafen (DE)
(72) Erfinder: GOTTSCHALL, Klaus, D-68542 Heddesheim (DE)
(74) Vertreter: Ricker, Mathias, Dr.
(86) Internationale Anmeldenummer: PCT/EP1999/009199
(87) Internationale Veröffentlichungsnummer: WO 2000/032648

(56) Entgegenhaltungen:
- WO-A-93/09075
- DE-A- 4 341 524
- US-A- 4 076 916
- US-A- 5 008 339
- M. SANCHEZ-CHAVES: "POLY(VINYL ALCOHOL) FUNCTIONALIZED BY MONOSUCCINATE GROUPS. COUPLING OF BIOACTIVE AMINO COMPOUNDS." POLYMER, Bd. 39, Nr. 13, 1998, Seiten 2751-2757, XP004112218

## Beschreibung

Die vorliegende Erfindung betrifft ein Verfahren zur Herstellung eines polymeren Netzwerkes, das polymere Netzwerk an sich, das durch das erfindungsgemäße Verfahren erhältlich ist, sowie die Verwendung des polymeren Netzwerkes in verschiedenen technischen Anwendungsgebieten.

Polymere Strukturen, die Poren aufweisen, in denen ein gegebenes Substrat selektiv gebunden werden kann, sind in einer ganzen Reihe von technischen Anwendungen von Interesse. In diesem Zusammenhang sei auf Stofftrennprozesse, katalytische Verfahren oder die Verwendung dieser polymeren Strukturen als Sensoren verwiesen.

Die WO 93/09075 beschreibt ein Verfahren zur Herstellung einer polymeren Struktur, wobei ein Polymer in Anwesenheit eines Vernetzungsreagenzes und zugleich in Anwesenheit eines Substrates ein Polymer durch radikalische Polymerisation aus den Monomeren hergestellt wird. Imprinting-Polymere werden für die Verwendung in der Chromatographie, in der Katalyse, als Biosensoren oder als künstliche Antikörper vorgeschlagen. Einen Überblick gibt G. Wulff in Angew. Chem, Int. Ed. Engl. 34 (1995) 1812-1832.

Die Imprinting-Technik weist allerdings eine Reihe von Nachteilen auf. So zeigen die Imprints im chromatographischen Test eine inakzeptable Peakverbreiterung und in der Regel eine unvollständige Substanzelution, wobei letztere zur Querkontamination von weiteren Produktfraktionen führt. Damit ist eine technische Anwendung der Imprints in der Chromatographie im wesentlichen ausgeschlossen. Ebenso weisen die Imprints in der Regel eine geringe Beladbarkeit mit Substrat, im wesentlichen im Promill-Bereich auf, wodurch selbstverständlich ein nur äußerst geringer Mengendurchsatz erreicht werden kann und ein technischer Trennprozeß nur unwirtschaftlich durchgeführt werden könnte.

Menger et al. beschreiben in J. Org. Chem. 63 (1998) 7578-7579 ein Verfahren, in dem ausgehend von einem kombinatorischen Ansatz Polyacrylsäureanhydrid mit drei oder vier, mehr oder weniger willkürlich ausgewählten Aminen umgesetzt wird, wobei 14 verschiedene Aminkombinationen in 96 verschiedenen Konzentrationsverhältnissen zu 1344 verschiedenen Polymeren fuhren. Die Polymere wurden bei der katalytischen Dehydrierung eines beta-Hydroxyketons eingesetzt, wobei jedoch weniger als 1 Prozent aller Polymere aufgrund der Reaktionsgeschwindigkeit für den katalytischen Prozeß überhaupt in Frage kamen. Im Zusammenhang mit den Versuchen wurde beobachtet, daß die Polymere in Anwesenheit des Substrates allmählich eine bessere katalytische Aktivität ausbilden. Allerdings wurden die Polymerstrukturen mit verbesserter Aktivität nicht stabilisiert, sondern derart labile Strukturen erhalten, daß durch Änderungen des pH-Wertes oder der Temperatur die katalytisch aktiveren Strukturen zerstört wurden.

Eine Aufgabe der vorliegenden Erfindung war es daher, ein Verfahren bereitzustellen, das die Nachteile der oben genannten Verfahren nicht aufweist.

Demgemäß betrifft die vorliegende Erfindung ein Verfahren zur Herstellung eines polymeren Netzwerkes, in dem
(i) ein oder mehrere Polymere bereitgestellt werden, die intramolekular oder intermolekular oder intra- und intermolekular durch kovalente oder nicht-kovalente Bindung miteinander vernetzt werden können,
(ii) die Konformation mindestens eines der Polymere an mindestens eine Templatverbindung unter Erhalt mindestens einer Vorzugskonformation des mindestens einen Polymers angepaßt wird und
(iii) mindestens eine der gemäß (ii) erhaltenen Vorzugskonformationen durch Vernetzung fixiert wird.

Der Begriff "Templatverbindung", wie er im Rahmen der vorliegenden Anmeldung verwendet wird, umfaßt sämtlichen Verbindungen, an die mindestens eine Konformation des mindestens einen eingesetzten Polymeren anpaßbar ist. Damit sind sämtliche Verbindungen denkbar, die durch Wechselwirkung mit dem Polymer zu einer Vorzugskonformation des mindestens einen eingesetzten Polymeren führen. Die Wechselwirkung muß dabei nicht mit dem Polymer an sich erfolgen, sondern kann auch mit einer polymeren Struktur erfolgen, die sich aus dem eingesetzten Polymer ableitet, wie dies weiter unten beschrieben ist.

Demgemäß sind als Templatverbindungen sowohl chemische Verbindungen als auch biologische Strukturen wie beispielsweise Mikroorganismen denkbar, hinsichtlich derer unter anderem etwa pathogene Organismen, vorzugsweise Viren, Bakterien oder Parasiten zu nennen sind. Ebenso sind beispielsweise Zellen, Fragmente oder Bestandteile von Zellen, Epitope, antigene Determinanten oder Rezeptoren zu nennen.

Im erfindungsgemäßen Verfahren ist die Konzentration der eingesetzten Templatverbindung in Lösung oder Suspension grundsätzlich frei wählbar. Bevorzugt liegt die Konzentration im Bereich von 0,25 bis 300 mmol/l, bezogen auf das eingesetzte Lösungsmittel oder Lösungsmittelgemisch. Die Lösungsmittel, in denen das Templat eingesetzt wird, sind ebenfalls im wesentlichen frei wählbar. Bevorzugt werden organische und wäßrige Lösungen, wobei bevorzugte Lösungsmittel unter anderem Chlorkohlenwasserstoffe mit bis zu drei C-Atomen, Nitrile wie beispielsweise Acetonitril, Ester wie beispielsweise Essigsäureethylester, Ketone wie beispielsweise Methylethylketon oder Aceton, offenkettige oder cyclische Ether wie beispielsweise THF oder Dioxan oder aromatische Verbindungen wie beispielsweise Toluol oder Xylole oder Mischungen aus zwei oder mehr dieser Verbindungen sind. Der pH-Bereich der Lösungen ist im wesentlichen frei wählbar und kann auf die Polymere und die Templatverbindung abgestimmt werden. Bevorzugt liegt der pH-Bereich bei der Fixierung im Bereich von 3 bis 12, besonders bevorzugt im Bereich von 4 bis 9 und besonders bevorzugt im Bereich von 6 bis 8.

Der Begriff "Vorzugskonformation", wie er im Rahmen der vorliegenden Erfindung verwendet wird, bezeichnet eine Konformation des Polymers, die aus einem oder mehreren Schritten des erfindungsgemäßen Verfahrens resultiert, wobei die Wechselwirkungsenthalpie zwischen der Vorzugskonformation und der Templatverbindung betragsmäßig größer ist als die Wechselwirkungsenthalpie zwischen der Templatverbindung und derjenigen Konformation, die das Polymer vor diesem einen oder vor diesen mehreren Schritten aufweist.

Bevorzugt ist dieser betragsmäßige Unterschied in der Wechselwirkungsenthalpie größer als 0,1 kcal/mol, besonders bevorzugt größer als 1 kcal/mol und ganz besonders bevorzugt größer als 3 kcal/mol.

Wie bereits angedeutet und weiter unten ausführlich beschrieben, können die erfindungsgemäß hergestellten polymeren Netzwerke unter anderem in Stofftrennprozessen eingesetzt werden. Dabei ist es selbstverständlich denkbar, daß Stoffe, die getrennt werden sollen, unter den Reaktionsbedingungen, die bei der Herstellung des polymeren Netzwerkes auftreten, nicht oder nur ungenügend stabil sind oder beispielsweise nicht zur Verfügung stehen. In diesem Fall können als Templatverbindungen beispielsweise Verbindungen eingesetzt werden, die zu den zu trennenden Stoffen homolog oder strukturverwandt, vorzugsweise isoster sind.

Die Anpassung der Konformation kann dabei unter anderem durch Wechselwirkung des Polymers mit der Templatverbindung erfolgen. Denkbar ist beispielsweise auch, daß zwei oder mehr Polymerstränge von gleichen oder voneinander verschiedenen Polymeren vernetzt werden und die resultierende polymere Struktur mit der mindestens einen Templatverbindung wechselwirkt und somit die Konformation der polymeren Struktur und damit auch die Konformation des eingesetzten Polymers an die Templatverbindung angepaßt wird.

Denkbar ist weiterhin, daß durch intramolekulare Vernetzung eines Polymerstranges eine Konformation ausgebildet wird, die mit der mindestens einen Templatverbindung wechselwirkt, wobei die Konformation des Polymers an die mindestens eine Templatverbindung angepaßt wird. Ausführungsformen, in denen eine solche intramolekulare Vernetzung erfolgt, sind im Rahmen der vorliegenden Erfindung bei allen geeigneten Polymeren denkbar. Besonders bevorzugt sind Polymere, die eine Molmasse von mehr als 10.000 g/mol, weiter bevorzugt von mehr als 30.000 g/mol und insbesondere bevorzugt von mehr als 100.000 g/mol aufweisen.

Weiterhin umfaßt die vorliegende Erfindung auch Ausführungsformen, in denen die Anpassung der Konformation derart erfolgt, daß in Abwesenheit der mindestens einen Templatverbindung durch inter- oder intramolekulare Vernetzung polymere Strukturen aufgebaut werden, deren Konformation durch spezifische Auswahl des mindestens einen eingesetzten Polymers oder/und des mindestens einen Vernetzungsreagenzes an die mindestens eine Templatverbindung angepaßt sind. In diesem Fall ist es beispielsweise denkbar, daß die Schritte (ii) und (iii), wie oben erwähnt, in einem Schritt erfolgen. Bei Vemetzung in Abwesenheit der mindestens einen Templatverbindung ist es aber auch denkbar, daß polymere Strukturen aufgebaut werden, die an die mindestens eine Templatverbindung grob angepaßt sind, wobei eine genauere Anpassung durch weitere Vernetzungsschritte in An- oder Abwesenheit der mindestens einen Templatverbindung erfolgen kann.

Demgemäß sind im erfindungsgemäßen Verfahren sämtliche Polymere einsetzbar, die intra- oder/und intermolekular vernetzt werden können und die per se oder nach Vernetzung mit der mindestens einen Templatverbindung wechselwirken können.

Unter dem Begriff "Wechselwirkung" werden im Rahmen der vorliegenden Erfindung sämtliche geeigneten kovalenten und nicht-kovalenten Wechselwirkungen verstanden.

Als mögliche Wechselwirkungen des mindestens einen eingesetzten Polymers oder einer polymeren Struktur, die beispielsweise durch intra- oder intermolekulare Vernetzung, wie oben beschrieben, aufgebaut werden, mit der mindestens einen Templatverbindung sind unter anderem zu nennen:
- Wasserstoffbrückenbindungen;
- Dipol-Dipol-Wechselwirkungen;
- Van der Waals-Wechselwirkungen;
- Hydrophobe Wechselwirkungen;
- Charge-Transfer-Wechselwirkungen, z.B. π-π-Wechselwirkung;
- Ionische Wechselwirkungen;
- Koordinative Bindung, z.B. an Übergangsmetallen;
- Kombinationen dieser Wechselwirkungen.

Selbstverständlich sind auch kovalente Bindungen zwischen Polymer oder/und polymerer Struktur und der mindestens einen Templatverbindung denkbar. Wird das im erfindungsgemäßen Verfahren hergestellte polymere Netzwerk in beispielsweise Stofftrennprozessen verwendet, so sind Wechselwirkungen zwischen Polymer oder/und polymerer Struktur und der mindestens einen Templatverbindung besonders bevorzugt, durch die die mindestens eine Templatverbindung reversibel gebunden wird.

Wechselwirkt das mindestens eine eingesetzte Polymer an sich mit der mindestens einen Templatverbindung, so weist es gemäß des erfindungsgemäßen Verfahrens mindestens eine funktionelle Gruppe auf, durch die diese Wechselwirkung ausgebildet werden kann. Soll die Konformation des Polymers, die sich durch Wechselwirkung mit der mindestens einen Templatverbindung ausbildet, durch Vernetzung fixiert werden, so ist es unter anderem denkbar, daß die Vernetzung über die funktionelle Gruppe erfolgt, über die die Wechselwirkung mit der mindestens einen Templatverbindung ausgebildet wurde. Bevorzugt weist das Polymer mindestens eine weitere funktionelle Gruppe auf, über die die Vernetzung erfolgt.

Der Begriff "funktionelle Gruppe", wie er im Rahmen der vorliegenden Erfindung verwendet wird, umfaßt demgemäß sämtliche chemischen Strukturen, über die kovalente oder/und nicht-kovalente Wechselwirkungen erfolgen können. Insbesondere fallen auch Kohlenwasserstoffketten und weitere Struktureinheiten, über die Van der Waals-Wechselwirkungen aufgebaut werden können, unter den Begriff der funktionellen Gruppe.

Eine besonders geeignete Struktur der eingesetzten Polymere liegt demgemäß dann vor, wenn die zur Wechselwirkung befähigten funktionellen Gruppen im Polymer nach Art oder/und Anzahl oder/und Dichte oder/und Verteilung in der Lage sind, eine bestimmte Templatverbindung zu binden. Ganz besonders geeignet sind solche Polymere, die in der Lage sind, eine bestimmte Templatverbindung in mehr als einer Molekülposition bi-, tri-, oligo- oder/und polyvalent zu binden. Für die Wechselwirkung können demgemäß auch zwei oder mehr funktionelle Gruppen, die gegebenenfalls räumlich durch mindestens eine, gegenüber einer Wechselwirkung inerte Gruppe getrennt sind, verantwortlich sein.

Der Begriff "im Polymer", wie er im Rahmen der vorliegenden Erfindung verwendet wird, bezieht sich unter anderem auf Polymere, bei denen die mindestens eine funktionelle Gruppe, die zur Ausbildung der Wechselwirkung mit dem Substrat oder/und zur Vernetzung verwendet wird, im Polymerstrang vorliegt. Ebenso bezieht sich der Begriff auf Polymere, in denen die mindestens eine funktionelle Gruppe in mindestens einer Seitenkette des Polymerstrangs vorliegt, sowie auf Polymere, in denen mindestens einen Art einer funktionellen Gruppe sowohl im Polymerstrang als auch in mindestens einer Seitenkette des Polymerstrangs vorliegt.

Demgemäß sind im erfindungsgemäßen Verfahren generell sowohl derivatisierte als auch nicht-derivatisierte Polymere einsetzbar.

Die mindestens eine funktionelle Gruppe, die im Polymer zur Ausbildung der Wechselwirkung mit der mindestens einen Templatverbindung oder/und zur Vernetzung benötigt wird, kann demgemäß bereits im ursprünglichen Polymer vorhanden sein und muß nicht notwendigerweise durch nachträgliche Derivatisierung in das Polymer eingebracht werden. Beispielhaft seien hier unter anderem etwa die Amino- oder Formylgruppen in Polyvinylamin oder etwa die Hydroxy- oder Acetylgruppen in Polyvinylalkohol genannt.

Im erfindungsgemäßen Verfahren ist es unter anderem möglich, durch Derivatisierung mindestens eines Polymers, das in derivatisierter Form in das Verfahren eingesetzt wird, mit maßgeschneiderten Rezeptorgruppen die Rezeptor-Templat-Wechselwirkung zu "designen". Im Rahmen der vorliegenden Erfindung kann hierbei der Derivatisierungsgrad so beeinflußt werden, daß die bestmögliche Wechselwirkung mit dem Templat erreicht wird. Ebenso ist es möglich, die Anpassung der Konformation des mindestens einen Polymers in Abwesenheit der mindestens einen Templatverbindung zu designen, indem beispielsweise durch die durch Derivatisierung eingeführten funktionellen Gruppen gezielt bestimmte Vernetzungsmöglichkeiten oder Wechselwirkungsmöglichkeiten in das Polymer eingebracht werden.

Werden im erfindungsgemäßen Verfahren ein oder mehr Polymere zunächst derivatisiert und dann in das erfindungsgemäße Verfahren eingesetzt, so kann die Derivatisierung nach sämtlichen geeigneten, beispielsweise aus dem Stand der Technik bekannten Verfahren erfolgen.

Um Polymere, die funktionelle Gruppen aufweisen, mit Rezeptorgrüppen auszustatten und derart zu derivatisieren, sind unter anderem drei Wege zu nennen, die in M. Antonietti, S. Heinz, Nachr. Chem. Tech. Lab. 40 (1992) Nr. 3, S. 308 - 314 aufgeführt sind. Gemäß dieser Schrift sind derivatisierte Polymere über statistische Polymerisation bzw. Copolymerisation, über die Herstellung von BlockCopolymeren und über die Herstellung von oberflächenfunktionalisierten Polymerpartikeln erhältlich. Diese Herstellungswege gehen von derivatisierten Monomeren aus, aus denen das Polymer erhalten wird.

Eine weitere Möglichkeit, Polymere zu derivatisieren, stellt die polymeranaloge Umsetzung von funktionelle Gruppen aufweisenden Polymeren mit Derivatisierungsverbindungen dar.

Polymerderivatisierungen werden beispielsweise an festen Oberflächen durch heterogene Umsetzung durchgeführt. Zu dieser Gruppe zählen unter anderem die Trägeraktivierung und Trägerimmobilisierung, bei denen üblicherweise eine nucleophile Substanz heterogen an ein Polymer, wie z.B. Epoxy-Polyacrylester oder BrCN-Sepharose gebunden wird, wie dies beispielsweise in P. Mohr, M. Holtzhauer, G. Kaiser, Immunosorption Techniques, Fundamentals and Applications, Akademie Verlag, Berlin (1992), S. 34 - 40 beschrieben ist.

In einer bevorzugten Ausführungsform kann im erfindungsgemäßen Verfahren gemäß (i) ein derivatisiertes Polymer zur Verfügung gestellt werden, das dadurch hergestellt wird, daß ein mindestens eine funktionelle Gruppe aufweisenden Polymers mit mindestens einem Aktivierungsreagens oder einem Derivat eines Aktivierungsreagens umgesetzt wird, wobei diese Umsetzung homogen oder heterogen, bevorzugt homogen erfolgen kann.

Dabei wird das Aktivierungsreagens in der Regel so gewählt werden, daß die mindestens eine funktionelle Gruppe des Polymers während der Umsetzung mit dem Aktivierungsreagens reagiert und damit in ihrer Reaktivität bei einer nachfolgenden Umsetzung mit einem Derivatisierungsreagens verbessert wird.

Demgemäß beschreibt die vorliegende Erfindung auch ein Verfahren, in dem das Umsetzungsprodukt aus dem mindestens eine funktionelle Gruppe aufweisenden Polymer und dem Aktivierungsreagens mit einem Derivatisierungsreagens umgesetzt wird.

Im Rahmen dieser Ausführungsform des erfindungsgemäßen Verfahrens können das mindestens eine funktionelle Gruppe aufweisende Polymer mit mindestens einem aktivierten und/oder mindestens einem nicht-aktivierten Derivatisierungsreagens und/oder einem Aktivierungsreagens gleichzeitig, d.h. im Sinne einer "Eintopfreaktion" umgesetzt werden.

Über diese Umsetzung des aktivierten, mindestens eine funktionelle Gruppe aufweisenden Polymers mit einem Derivatisierungsreagens kann ein gewünschter Rest in das Polymer eingeführt werden.

Wurde hierbei ein Polymer mit unterschiedlichen Aktivierungsreagenzien umgesetzt, so können diese aktivierten funktionellen Gruppen gegenüber einem oder mehreren Derivatisierungsreagenzien unterschiedliche Reaktivität aufweisen. Demgemäß ist es im Rahmen des erfindungsgemäßen Verfahrens denkbar, auf diese Weise funktionelle Gruppen selektiv zu derivatisieren. Der Begriff "selektiv" bedeutet in diesem Zusammenhang, daß ein Polymer, das beispielsweise zwei oder mehr voneinander verschiedene funktionelle Gruppen aufweist, mit beispielsweise zwei verschiedenen Aktivierungsreagenzien umgesetzt wird, so daß eine nachfolgende Umsetzung mit einem Derivatisierungsreagens zur Derivatisierung überwiegend bis ausschließlich an der oder den aktivierten funktionellen Gruppen erfolgt, die mit einem dieser zwei Aktivierungsreagenzien aktiviert ist oder sind, in der Regel an der oder den bezüglich des Derivatisierungsreagens reaktiveren aktivierten funktionellen Gruppe(n).

Im erfindungsgemäßen Verfahren ist es weiterhin möglich, das Aktivierungsreagens vor der Umsetzung mit dem mindestens eine funktionelle Gruppe aufweisenden Polymer mit dem Derivatisierungsreagens umzusetzen, um dann dieses Umsetzungsprodukt mit dem mindestens eine funktionelle Gruppe aufweisenden Polymer umzusetzen.

Daher beschreibt die vorliegende Erfindung auch ein Verfahren, wie oben beschrieben, wobei das Derivat des Aktivierungsreagens durch vorherige Umsetzung des Aktivierungsreagens mit einem Derivatisierungsreagens erhalten wird.

Eine weitere Ausführungsform der vorliegenden Erfindung besteht darin, das mindestens eine funktionelle Gruppe aufweisende Polymer mit verschiedenen Produkten aus Umsetzungen von Aktivierungsreagenzien und Derivatisierungsreagenzien umzusetzen. So kann beispielsweise ein Gemisch aus Verbindungen mit dem Polymer umgesetzt werden, wobei das Gemisch Umsetzungsprodukte aus einem Aktivierungsreagens und zwei oder mehr verschiedenen Derivatisierungsreagenzien umfaßt. Ebenso ist ein Gemisch denkbar, das Umsetzungsprodukte aus einem Derivatisierungsreagens und zwei oder mehr verschiedenen Aktivierungsreagenzien umfaßt. Natürlich ist es auch möglich, sollte dies erforderlich sein, ein Gemisch einzusetzen, das Umsetzungsprodukte aus zwei oder mehr verschiedenen Aktivierungsreagenzien und zwei oder mehr verschiedenen Derivatisierungsreagenzien umfaßt. Selbstverständlich ist es im Rahmen der vorliegenden Erfindung auch möglich, die verschiedenen Umsetzungsprodukte aus Aktivierungsreagens und Derivatisierungsreagens nicht im Gemisch, sondern einzeln und in der gewünschten Reihenfolge mit dem mindestens eine funktionelle Gruppe aufweisenden Polymer umzusetzen.

Demgemäß beschreibt die vorliegende Erfindung auch ein Verfahren wie oben beschrieben, wobei das mindestens eine funktionelle Gruppe aufweisende Polymer mit mindestens zwei verschiedenen Derivaten eines Aktivierungsreagens umgesetzt wird und die Umsetzungen mit jeweils einem Derivat nacheinander erfolgen.

Als Aktivierungsreagens können prinzipiell alle aus der Literatur bekannten Aktivierungsreagenzien eingesetzt werden. Einen Überblick über eine ganze Reihe von Aktivierungsreagenzien, die zur Aktivierung von verschiedenen funktionellen Gruppen eingesetzt werden können, gibt beispielsweise der bereits oben zitierte Artikel von P. Mohr, M. Holtzhauer, G. Kaiser, der diesbezüglich durch Bezugnahme vollumfänglich in den Kontext der vorliegenden Patentanmeldung einbezogen wird.

Insbesondere seien dabei Chlorameisensäureester und Chlorameisensäureester mit elektronenziehenden Resten erwähnt.

Insbesondere beschreibt die vorliegende Erfindung ein Verfahren, in dem sich das Aktivierungsreagens von einer Verbindung der folgenden Struktur (I) ableitet: 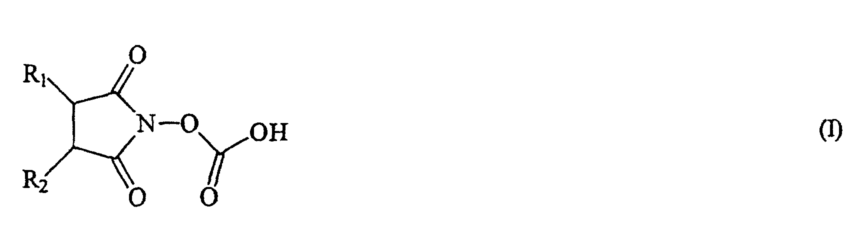 wobei R₁ und R₂ gleich oder unterschiedlich sind und geradkettig, verzweigtkettig oder zu einem Carbozyklus oder einem Heterozyklus verbrückt sein können und so gewählt sind, daß das Aktivierungsreagens oder das Derivat des Aktivierungsreagens mit dem mindestens eine funktionelle Gruppe aufweisenden Polymer in homogener Phase umgesetzt werden kann.

Dabei können R₁ und R₂ beispielsweise Cycloalkyl-, Cykloalkenyl-, Alkyl-, Aryl- oder Aralkyl-Reste mit bis zu 30 C-Atomen sein.

In einer bevorzugten Ausführungsform beschreibt die vorliegende Erfindung ein Verfahren, in dem sich das Aktivierungsreagens von einer Verbindung der folgenden Struktur (I') ableitet, 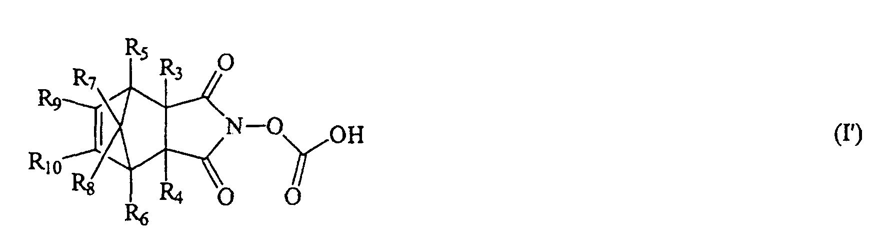 wobei R₃ bis R₁₀ gleich oder unterschiedlich sein können und Wasserstoff, geradkettige oder verzweigtkettige Alkyl-, Aryl-, Cycloalkyl-, heterocyclische und Aralkyl-Reste mit bis zu 30 C-Atomen darstellen können, oder aber mehrere der R₃ bis R₁₀ wiederum zu einem Carbo- oder Heterozyklus verbrückt sein können und so gewählt sind, daß das Aktivierungsreagens oder das Derivat des Aktivierungsreagens mit dem mindestens eine funktionelle Gruppe aufweisenden Polymer in homogener Phase umgesetzt werden kann.

Weiter beschreibt die vorliegende Erfindung ein Verfahren, in dem das Aktivierungsreagens folgende Struktur (II) aufweist, 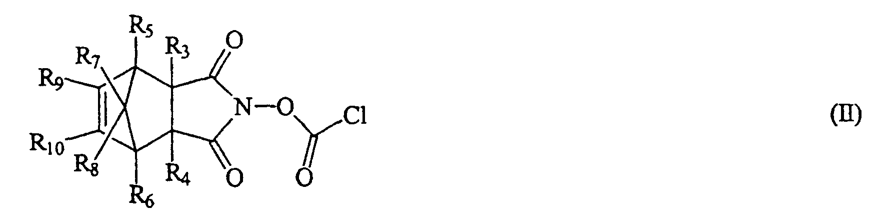 wobei R₃ bis R₁₀ wie oben definiert sind.

In einer ebenfalls bevorzugten Ausführungsform beschreibt die vorliegende Erfindung ein Verfahren, in dem sich das Aktivierungsreagens von einer Verbindung der Struktur (II), wie oben angegeben, ableitet, wobei R₃ bis R₁₀ jeweils Wasserstoff ist.

Die Verbindungen mit den Strukturen (I), (I') und (II) sind nach allen gängigen, aus dem Stand der Technik bekannten Verfahren herstellbar. Ein solches Verfahren für ONB-Cl ist beispielsweise in P. Henklein et al., Z. Chem. 9 (1986), S. 329 f. angegeben.

Mit den wie oben beschriebenen Aktivierungsreagenzien oder Derivaten von Aktivierungsreagenzien können im Prinzip alle Polymere, die mindestens eine bezüglich der Aktivierungsreagenzien reaktive funktionelle Gruppe aufweisen, umgesetzt werden.

Ganz allgemein werden im erfindungsgemäßen Verfahren Polymere eingesetzt, die als mindestens eine funktionelle Gruppe eine Gruppe aufweisen, die mindestens eine nucleophile Einheit aufweist.

Als bevorzugte funktionelle Gruppen des mindestens eine funktionelle Gruppe aufweisenden Polymers sind u.a. OH-Gruppen, gegebenenfalls substituierte Amingruppen, SH-Gruppen, OSO₃H-Gruppen, SO₃H-Gruppen, OPO₃H₂-Gruppen, OPO₃HR₁₁-Gruppen, PO₃H₂-Gruppen, PO₃HR₁₁-Gruppen, COOH-Gruppen und Gemische aus zwei oder mehr davon zu nennen, wobei jeweils R₁₁ so gewählt ist, daß das Aktivierungsreagens oder das Derivat des Aktivierungsreagens mit dem mindestens eine funktionelle Gruppe aufweisenden Polymer in homogener oder/und heterogener Phase umgesetzt werden kann. Ebenso können die mindestens eine funktionelle Gruppe aufweisenden Polymere auch weitere polare Gruppen, wie beispielsweise -CN, enthalten.

Als das mindestens eine funktionelle Gruppe aufweisende Polymer können sowohl natürliche als auch synthetische Polymere eingesetzt werden. Eventuelle Einschränkungen bei der Auswahl der Polymere ergeben sich nur dadurch, daß die Umsetzung des Polymers im Rahmen des erfindungsgemäßen Verfahrens in homogener Phase vorgenommen wird und aus dem späteren Verwendungszweck des derivatisierten Polymers.

Dabei fallen im Rahmen dieser Erfindung unter den Begriff "Polymer" selbstverständlich ebenso höhermolekulare Verbindungen, die in der Polymerchemie als "Oligomere" bezeichnet werden.

Ohne auf bestimmte Polymere beschränken zu wollen, seien als mögliche, mindestens eine funktionelle Gruppe aufweisende Polymere u.a. genannt:
- Polysaccharide, wie z.B. Cellulose, Amylose und Dextrane;
- Oligosaccharide wie z.B. Cyclodextrine;
- Chitosan;
- Polyvinylalkohol, Poly-Thr, Poly-Ser;
- Polyethylenimin, Polyallylamin, Polyvinylamin, Polyvinylimidazol, Polyanilin, Polypyrrol, Poly-Lys;
- Poly(meth)acrylsäure(ester), Polyitaconsäure, Poly-Asp;
- Poly-Cys;

Ebenso sind nicht nur Homopolymere, sondern auch Copolymere und insbesondere Block-Copolymere und statistische Copolymere prinzipiell geeignet, um im vorliegenden Verfahren eingesetzt zu werden. Dabei sind sowohl Copolymere mit nicht-funktionalisierbaren Anteilen wie etwa Co-Styrol oder Co-Ethylen oder auch Copolymere wie etwa Co-Pyrrolidon zu nennen.

Werden die Polymere im erfindungsgemäßen Verfahren in homogener flüssiger Phase derivatisiert, so werden, um eine optimale Löslichkeit zu erreichen, vorzugsweise gemischt-funktionale oder auch vorderivatisierte Polymere eingesetzt. Als Beispiele hierfür sind etwa zu nennen:
- partiell oder vollständig alkylierte oder acylierte Cellulose;
- Polyvinylacetat / Polyvinylalkohol;
- Polyvinylether / Polyvinylalkohol;
- N-Butylpolyvinylamin / Polyvinylamin.

Ebenso können auch Polymer / Copolymer-Gemische verwendet werden. Dabei können alle geeigneten Polymer / Copolymer-Gemische eingesetzt werden, beispielsweise Gemische aus den oben bereits genannten Polymeren und Copolymeren, wobei unter anderem hierbei etwa zu nennen ist:
- Poly(acrylsäure)-Co-Vinylacetat;
- Polyvinylalkohol-co-Ethylen;
- Polyoxymethylen-co-Ethylen;
- modifizierte Polystyrole, wie z.B. Copolymere des Styrols mit (Meth)acrylsäure(estern);
- Polyvinylpyrrolidon und dessen Copolymere mit Poly(meth)acrylaten.

Sämtliche dieser oben genannten Polymere, die einer Derivatisierung zugänglich sind, können selbstverständlich auch in underivatisierter Form in das erfindungsgemäße Verfahren eingesetzt werden.

Wird, wie oben beschrieben, das mindestens eine funktionelle Gruppe aufweisende Polymer mit einem Aktivierungsreagens wie beispielsweise einer Verbindung der Struktur (II) umgesetzt, so kann, wie ebenfalls oben beschrieben, dieses Umsetzungsprodukt mit einem Derivatisierungsreagens umgesetzt werden.

Hierbei können prinzipiell alle Reagenzien, die mit dem aktivierten Polymer reagieren können und unmittelbar oder mittelbar zum gewünschten derivatisierten Polymer führen, verwendet werden. Unter anderem werden im erfindungsgemäßen Verfahren Verbindungen als Derivatisierungsreagenzien eingesetzt, die mindestens eine nucleophile Gruppe aufweisen.

Beispielsweise werden Derivatisierungsreagenzien verwendet, die die allgemeine Zusammensetzung HY-R₁₂ aufweisen. Dabei steht Y beispielsweise für O, NH, NR₁₃ oder S, wobei R₁₂ und R₁₃ i.a. frei gewählt werden können. Beispielsweise stehen sie für einen, gegebenenfalls geeignet substituierten, Alkyl- oder Arylrest.

Daneben ist es auch möglich, das aktivierte Polymer mit nucleophilen chiralen Verbindungen umzusetzen. Als Beispiele für solche chiralen Nucleophile seien beispielsweise genannt:
Borneol, (-)-Menthol, (-)-Ephedrin, α-Phenylethylamin, Adrenalin, Dopamin.

Eine weitere Möglichkeit ist es, im erfindungsgemäßen Verfahren das aktivierte Polymer mit einem aminogruppenhaltigen ein- oder mehrwertigen Alkohol bzw. Thiol umzusetzen. Wird das mindestens eine funktionelle Gruppe enthaltende Polymer beispielsweise mit ONB-Cl aktiviert, so reagiert der aminogruppenhaltige ein- oder mehrwertige Alkohol oder das aminogruppenhaltige ein- oder mehrwertige Thiol selektiv mit der Aminogruppe. Die somit in das Polymer eingeführten OH- oder SH-Gruppen lassen sich dann in einem weiteren Schritt wieder mit beispielsweise einem der oben beschriebenen Aktivierungsreagenzien aktivieren, wodurch Kettenverlängerungen und Verzweigungen, je nach Wertigkeit der ursprünglich eingesetzten Alkohole oder Thiole, ermöglicht werden.

In einer anderen, bereits oben beschriebenen Ausführungsform des erfindungsgemäßen Verfahrens wird das mindestens eine funktionelle Gruppe aufweisende Polymer mit einem aktivierten Derivatisierungsreagens umgesetzt, wobei letzteres aus der Umsetzung eines Aktivierungsreagens mit dem Derivatisierungsreagens erhalten wird.

Vorzugsweise werden im erfindungsgemäßen Verfahren aktivierte Derivate von Aminen, Alkoholen, Thiolen, Carbonsäuren, Sulfonsäuren, Sulfaten, Phosphaten oder Phosphonsäuren mit dem mindestens eine funktionelle Gruppe aufweisenden Polymer umgesetzt, wobei, wiederum in einer bevorzugten Ausführungsweise, die Verbindungen mit ONB-Cl aktiviert werden.

Unter anderem weisen also diese aktivierten Derivatisierungsreagenzien, die mit dem mindestens eine funktionelle Gruppe aufweisenden Polymer umgesetzt werden können, die folgenden allgemeinen Strukturen (III) bis (IX) auf: 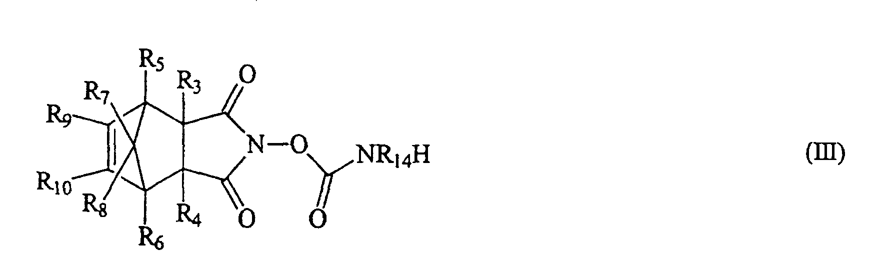 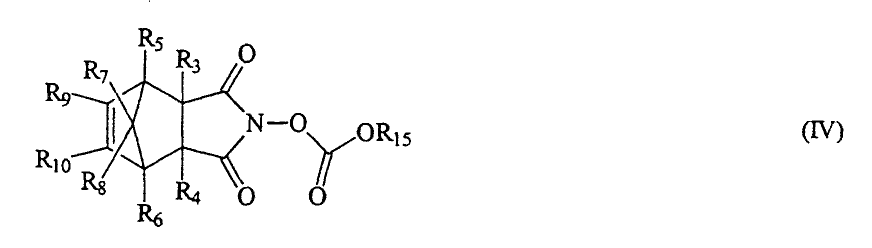 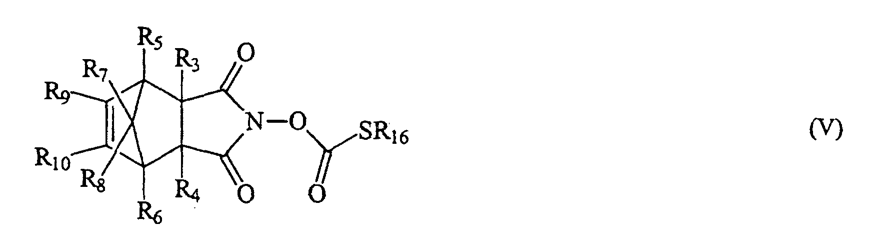 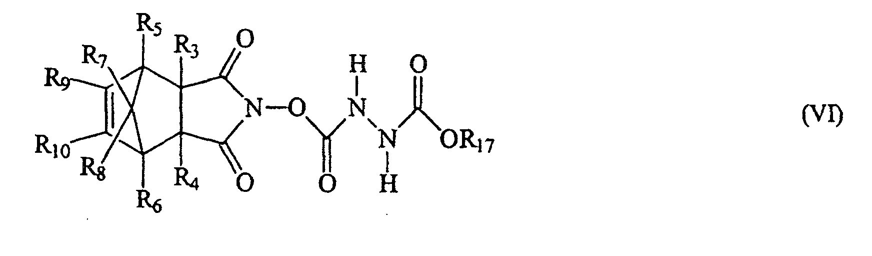 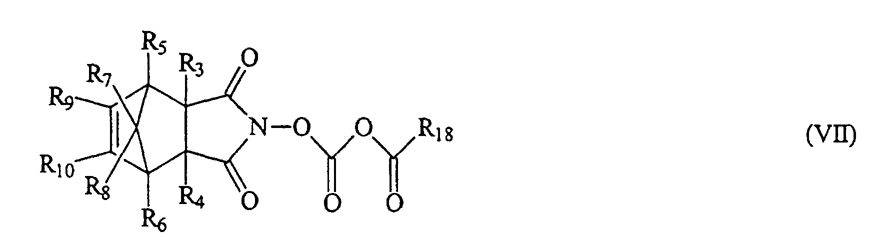 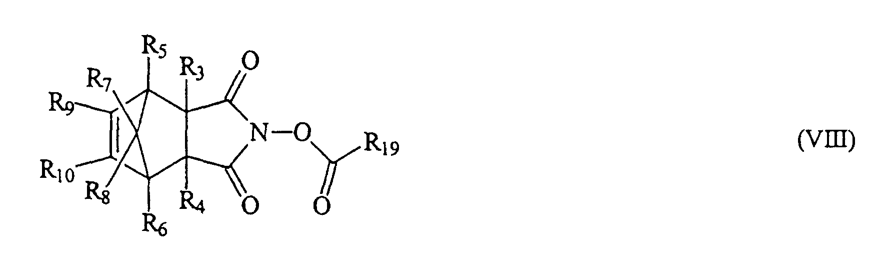 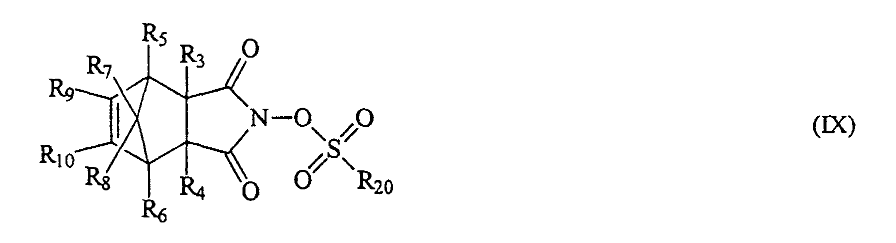 wobei R₃ bis R₁₀ wie oben definiert sind und R₁₄ bis R₂₀ im allgemeinen keinen Beschränkungen unterliegen, beispielsweise auch Chiralität aufweisen können, und im erfindungsgemäßen Verfahren so gewählt werden, daß die Umsetzung mit dem mindestens eine funktionelle Gruppe aufweisenden Polymer in homogener Phase durchgeführt werden kann. Dabei werden die Substituenten R₁₄ bis R₂₀ in der Regel in Abhängigkeit von der gewünschten Wechselwirkung mit dem Substrat gewählt. Dabei können R₁₄ bis R₂₀ gleich oder verschieden sein und Wasserstoff, einen geradkettigen oder verzweigtkettigen Alkyl-, Aryl- oder Aralkylrest mit bis zu 30 C-Atomen oder entsprechende Heteroatome aufweisende Reste darstellen.

Ebenso können mehrwertige Amine, Alkohole, Thiole, Carbonsäuren, Sulfonsäuren, Sulfate, Phosphate oder Phosphonsäuren mit einem Aktivierungsreagens umgesetzt werden und dieses Umsetzungsprodukt mit dem mindestens eines funktionelle Gruppe aufweisenden Polymer umgesetzt werden, wobei hier insbesondere Polyole zu nennen sind.

Selbstverständlich ist es auch denkbar, Derivatisierungsreagenzien zu aktivieren und mit dem mindestens eine funktionelle Gruppe aufweisenden Polymer umzusetzen, die zwei oder mehr verschiedene Arten der oben genannten funktionellen Gruppen aufweisen. Als Beispiel, unter anderem, sind hierbei etwa Aminoalkohole zu nennen.

Solche mehrwertigen Derivatisierungsreagenzien können im Rahmen der vorliegenden Erfindung selektiv partiell oder vollständig mit einem Aktivierungsreagens aktiviert und mit dem mindestens eine funktionelle Gruppe aufweisenden Polymer umgesetzt werden.

Die Umsetzung des mindestens eine funktionelle Gruppe aufweisenden Polymers mit einem aktivierten, mehrwertigen Derivatisierungsreagens kann im erfindungsgemäßen Verfahren, neben der Tatsache, daß ein geeignetes Polymer gemäß (i) bereitgestellt wird, auch zur Polymervernetzung und weiter zur Polymerstabilisierung oder/und zur Polymerverzweigung verwendet werden.

Sowohl die Umsetzung des mindestens eine funktionelle Gruppe aufweisenden Polymers mit einem aktivierten Derivatisierungsreagens als auch die Umsetzung des mindestens eine funktionelle Gruppe aufweisenden Polymers mit einem Aktivierungsreagens und anschließender Umsetzung des Produktes mit einem Derivatisierungsreagens nach dem erfindungsgemäßen Verfahren ermöglicht es, Polymerderivate herzustellen, die verschiedenste räumliche Anordnungen aufweisen und demzufolge für eine Vielzahl von Anwendungen, in denen diese räumliche Anordnung von entscheidender Bedeutung ist, verwendbar sind.

So lassen sich beispielsweise Anordnungen realisieren, die wie Hairy Rods, Kammpolymere, Netze, Körbe, Schalen, Röhren, Trichter oder Reußen aufgebaut sind.

In einer ebenfalls bevorzugten Ausführungsform beschreibt die vorliegende Erfindung ein Derivat der hier in Rede stehenden Art, das mindestens eine Rezeptorgruppe aufweist, die eine für die Bindung eines biologischen oder synthetischchemischen Substrats maßgebliche Bindungseinheit ausweist.

Ein derartiges für biologische Substrate maßgeschneidertes Derivat weist dann entsprechende Rezeptorgruppen, die beispielsweise auch in der Natur vorkommende Strukturen oder für die Bindung verantwortliche Teile derartiger Strukturen aufweisen können, auf, die dann mit einem biologischen Substrat in Wechselwirkung treten können. Dabei sind hier insbesondere beispielsweise Enzym-, Aminosäure-, Peptid-, Zucker-, Aminozucker-, Zuckersäuren- sowie Oligosaccharid-Gruppen bzw. Derivate davon zu nennen. Essentiell für die obigen Rezeptorgruppen ist ausschließlich, daß das in der Natur vorkommende Bindungsprinzip eines Rezeptors mit einem Substrat beibehalten wird, so daß mittels dieser Ausführungsform beispielsweise synthetische Enzyme, bindende Domänen von Antikörpern oder sonstige physiologische Epitope erhalten werden können. Unter anderem wird hierbei im Rahmen der vorliegenden Erfindung ein Derivat eines mindestens drei funktionelle Gruppen aufweisenden Polymers, wie oben beschrieben, gewählt, bei dem mindestens eine Rezeptorgruppe ein Aminosäure-Rest oder ein Aminsäurederivat-Rest ist. Als Aminosäuren sind beispielsweise denkbar:
- Aminosäuren mit aliphatischen Resten wie z.B. Glycin, Alanin, Valin, Leucin, Isoleucin;
- Aminosäuren mit einer aliphatischen Seitenkette, die eine oder mehrere Hydroxylgruppen umfaßt, wie z.B. Serin, Threonin;
- Aminosäuren, die eine aromatische Seitenkette aufweisen, wie z.B. Phenylalanin, Tyrosin, Tryptophan;
- Aminosäuren, die basische Seitenketten umfassen, wie z.B. Lysin, Arginin, Histidin;
- Aminosäuren, die saure Seitenketten aufweisen, wie z.B. Asparaginsäure, Glutaminsäure;
- Aminosäuren, die Amidseitenketten aufweisen, wie z.B. Asparagin, Glutamin;
- Aminosäuren, die schwefelhaltige Seitenketten aufweisen, wie z.B. Cystein, Methionin;
- Modifizierte Aminosäuren, wie z.B. Hydroxyprolin, γ-Carboxylglutamat, *O*-Phosphoserin;
- Derivate der genannten oder von gegebenenfalls weiteren Aminosäuren, beispielsweise an der oder gegebenenfalls den Carboxylgruppen mit beispielsweise Alkyl- oder Arylresten, die gegebenenfalls geeignet substituiert sein können, veresterte Aminosäuren.

Statt der Aminosäure ist auch die Verwendung eines oder mehrerer Di- oder Oligopeptide denkbar, wobei insbesondere Homopeptide, die nur aus gleichen Aminosäuren aufgebaut sind, zu nennen sind. Als Beispiel für ein Dipeptid ist beispielsweise Hippursäure zu nennen. Weiter können auch beta-, gamma- oder sonstige strukturisomeren Aminosäuren und davon abgeleitete Peptide wie z.B. Depsipeptide verwendet werden.

Ganz allgemein können als Aktivierungsreagenzien im erfindungsgemäßen Verfahren Verbindungen der allgemeinen Struktur (X) 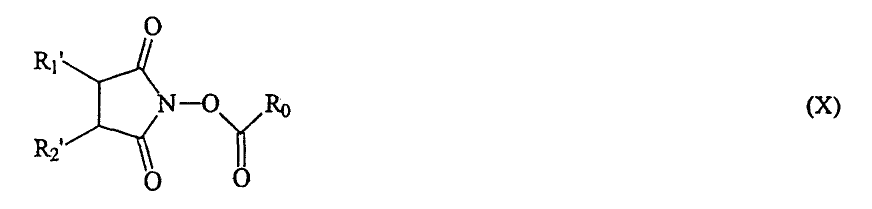 eingesetzt werde, die dadurch gekennzeichnet sind, daß R₀ für ein Halogenatom oder einen Rest (X') 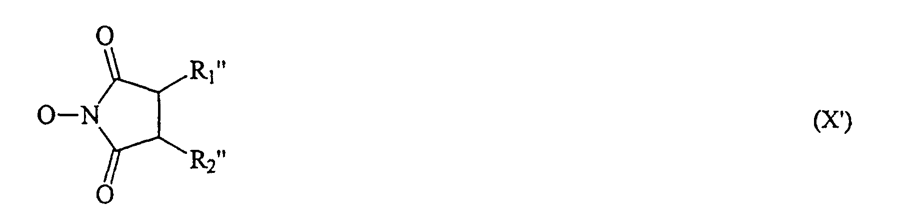 steht und R₁', R₂'; R₁" und R₂" gleich oder unterschiedlich sind und Wasserstoff, geradkettige oder verzweigtkettige Alkyl-, Aryl-, Cycloalkyl-, heterocyclische oder Aralkylreste mit bis zu 30 C-Atomen darstellen oder entweder R₁' und R₂' oder R₁" und R₂" oder sowohl R₁' und R₂' als auch R₁" und R₂" zu mindestens einem Carbocyclus oder zu mindestens einem Heterocyclus oder zu mindestens einem Carbocyclus und zu mindestens einem Heterocyclus verknüpft sind. Insbesondere sind hierbei beispielhaft Verbindungen, die die folgenden Strukturen (X₁) bis (X₃₉) umfassen, zu nennen: 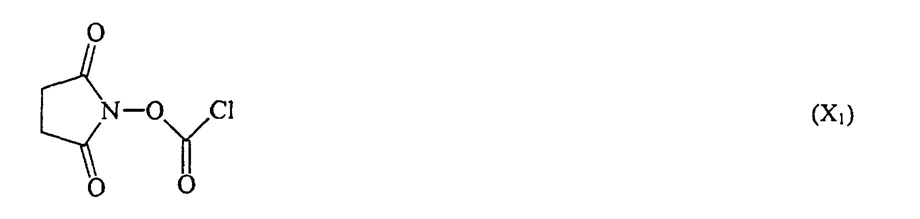 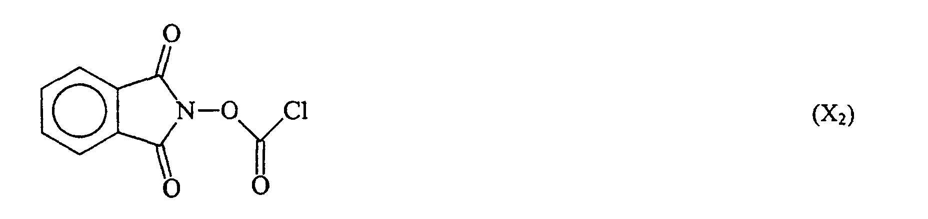 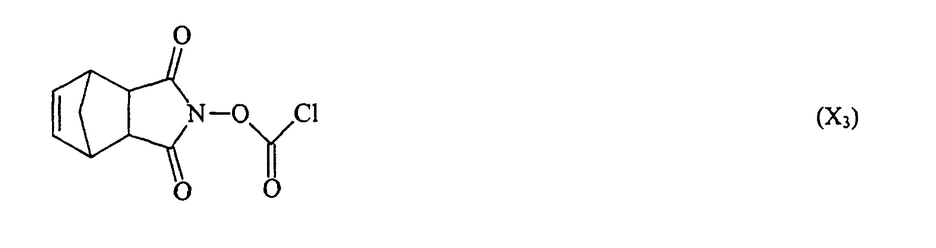 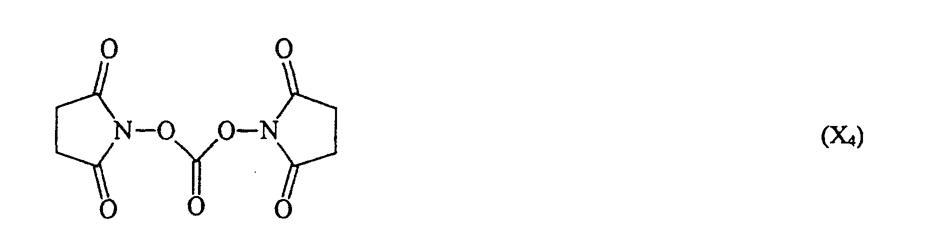 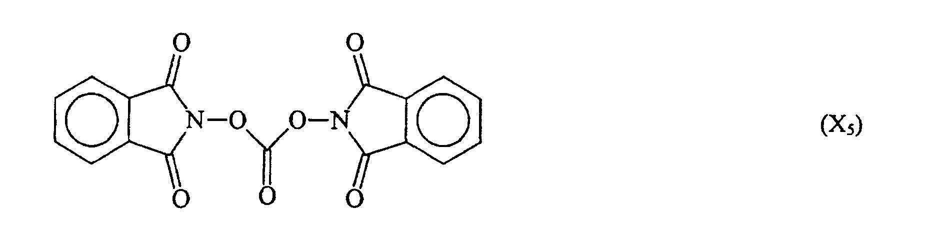 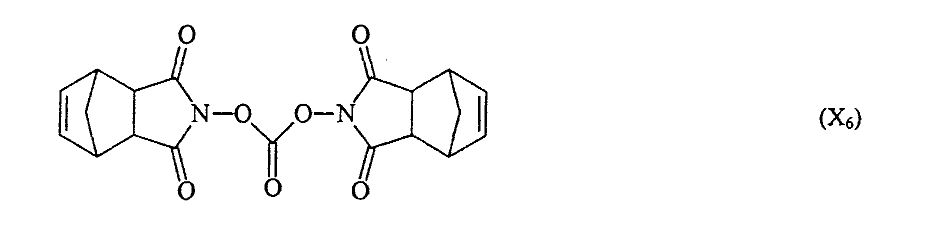 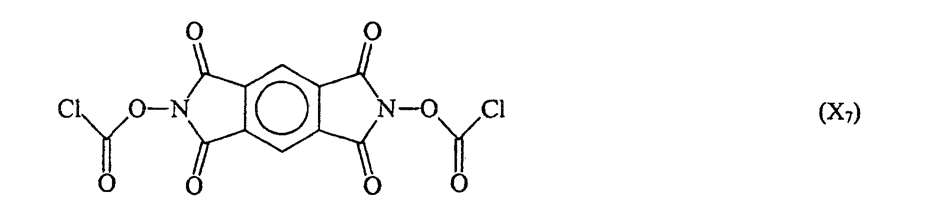 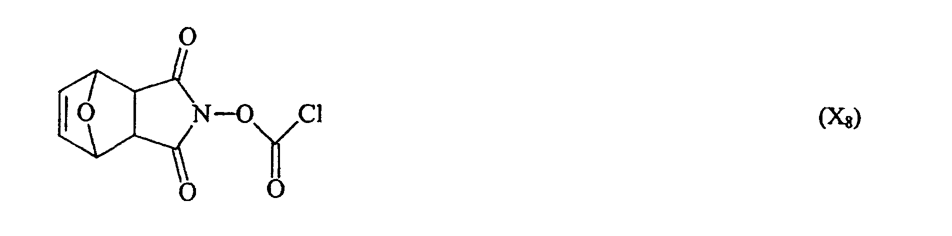 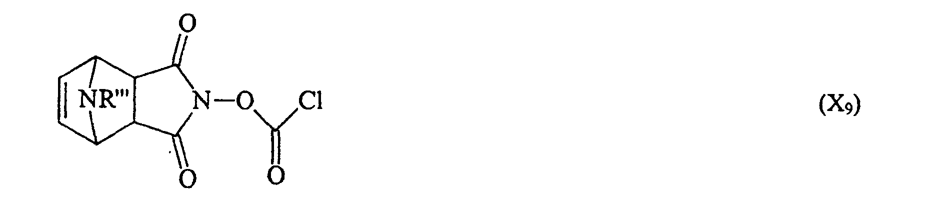 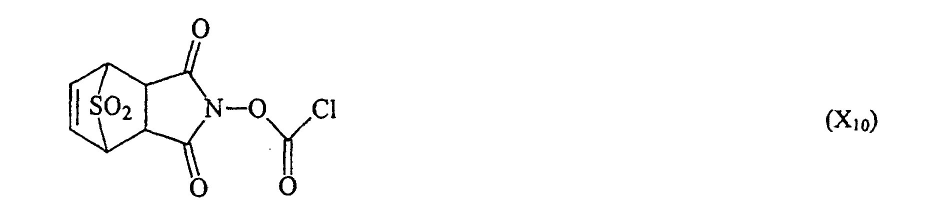 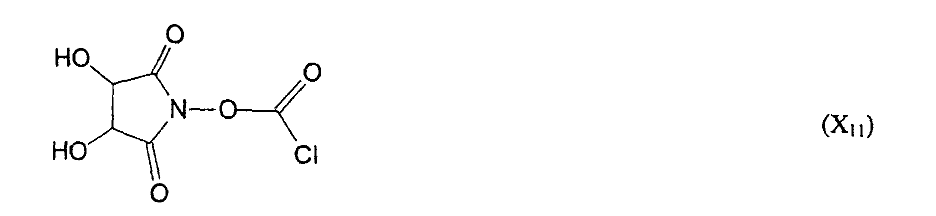 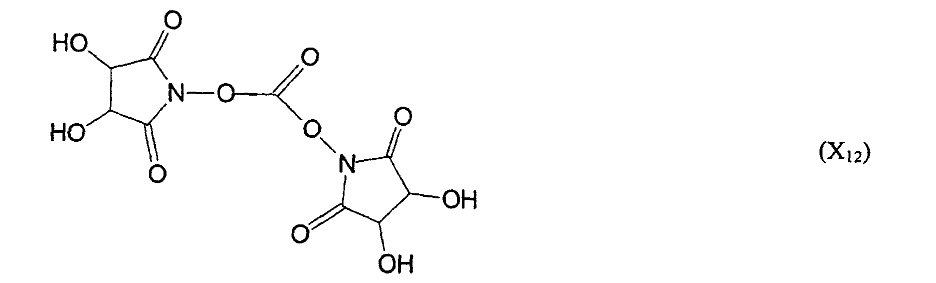 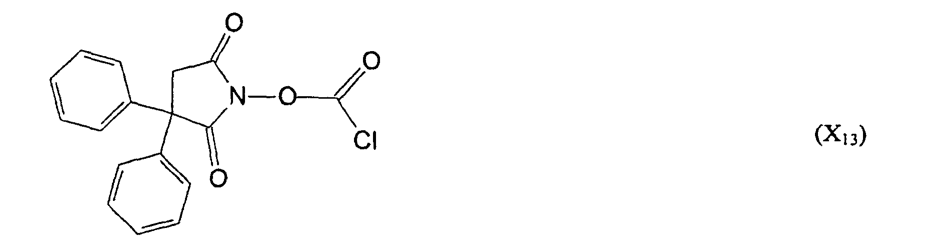 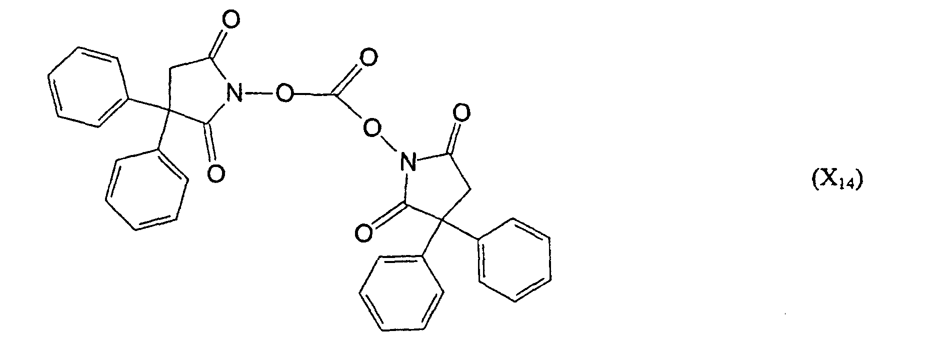 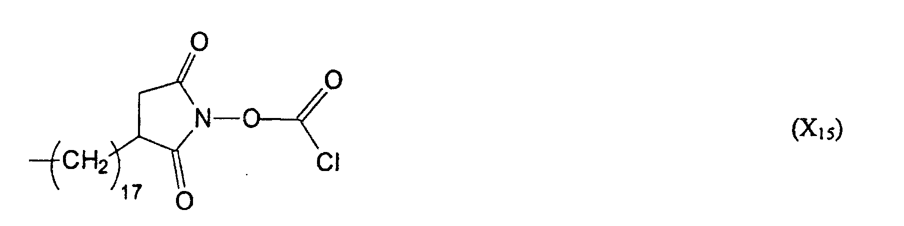 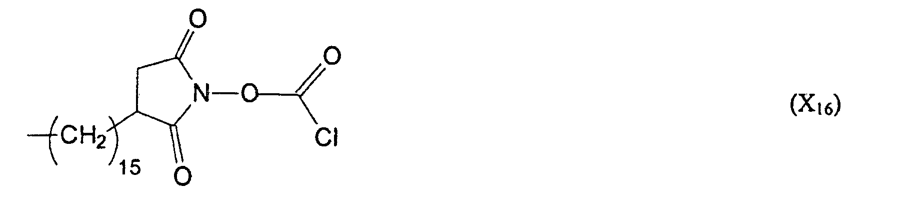 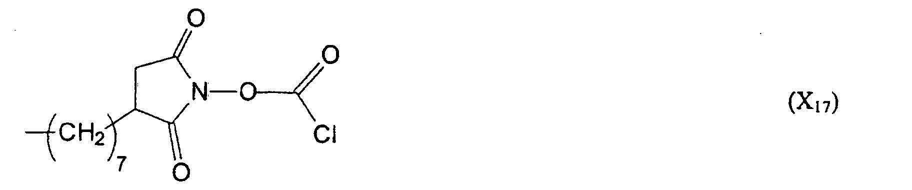 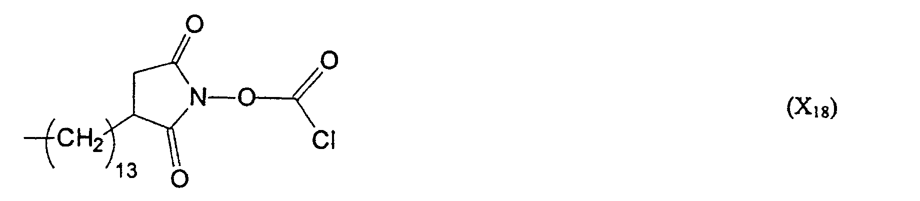 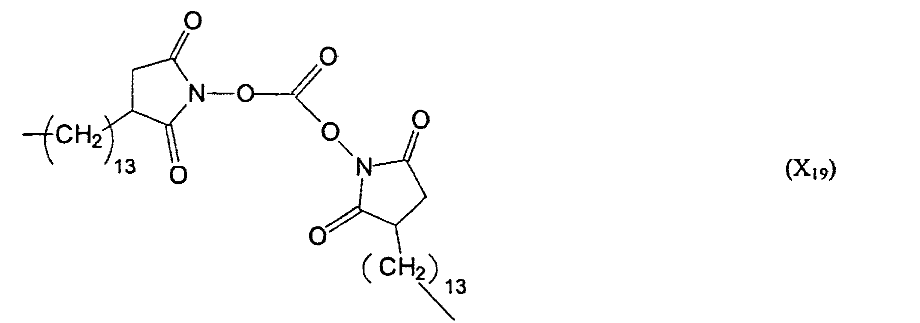 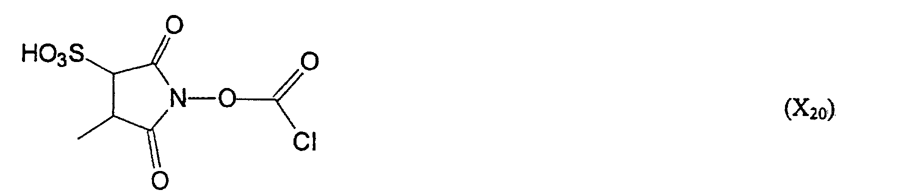 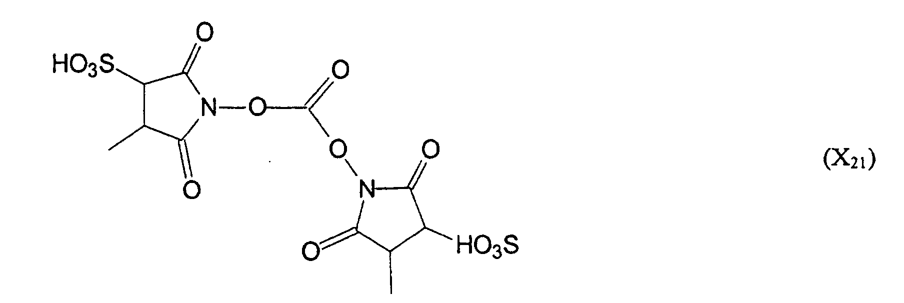 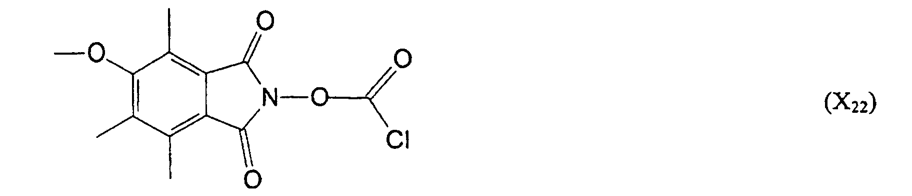 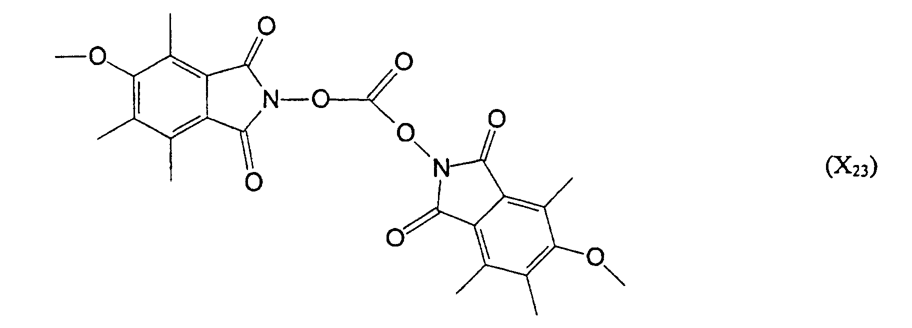 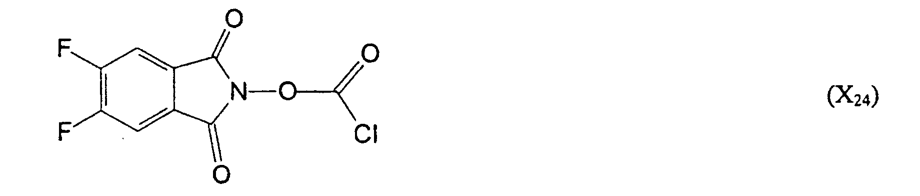 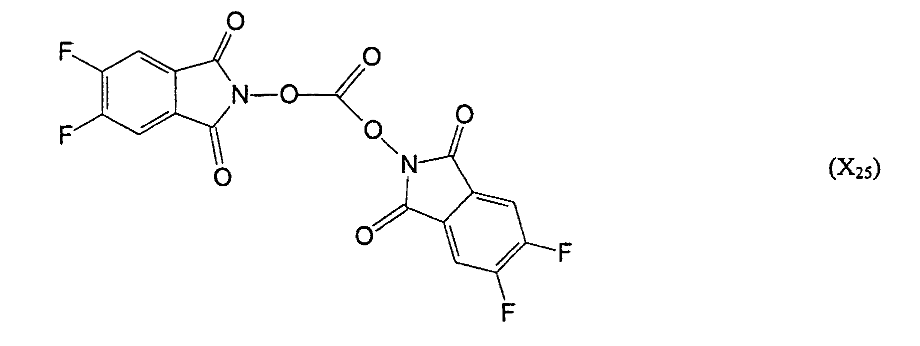 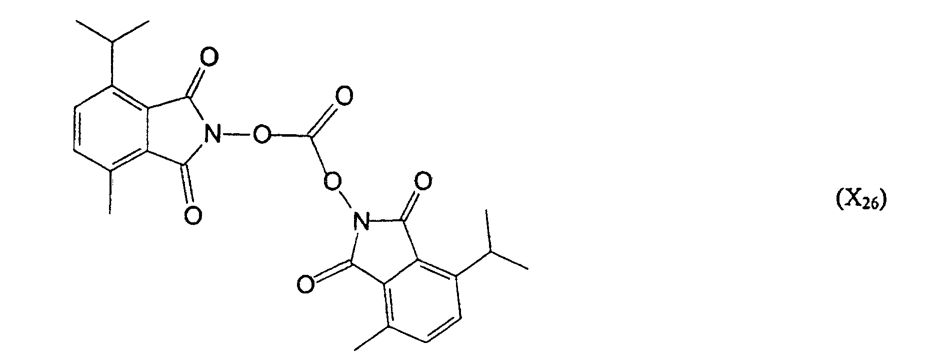 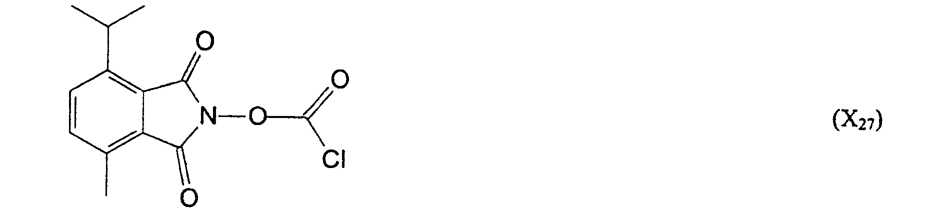 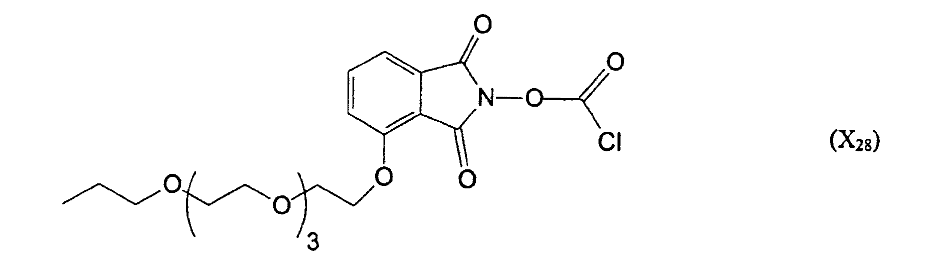 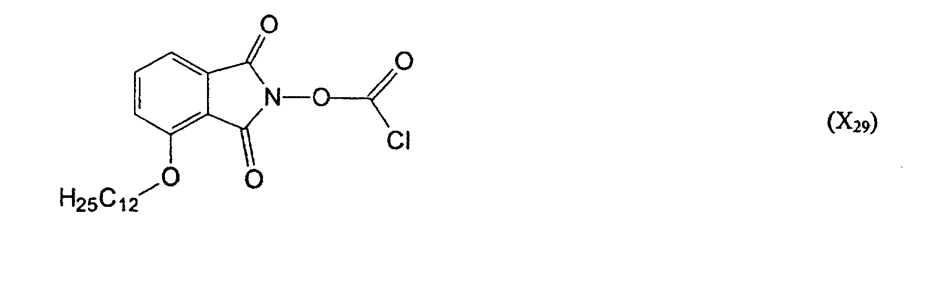 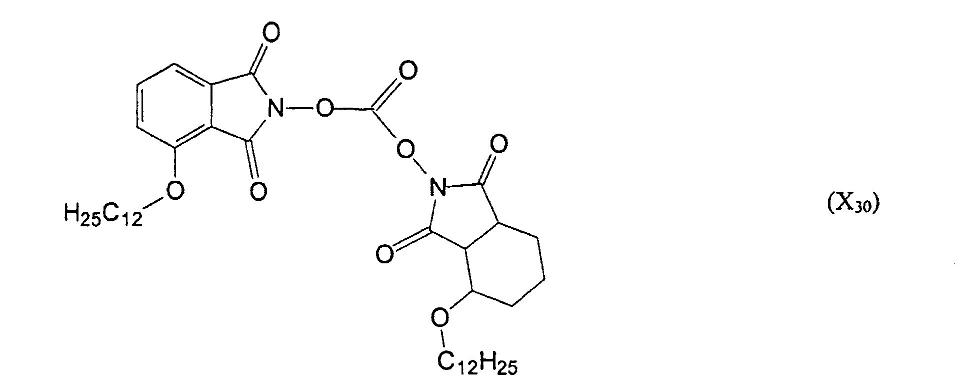 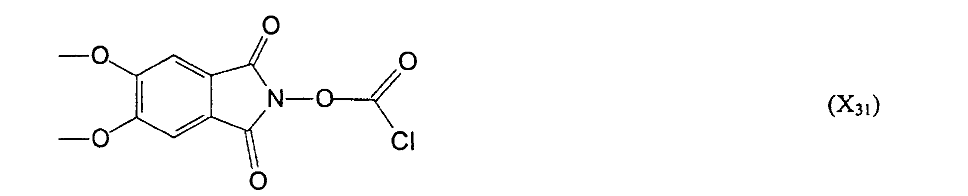 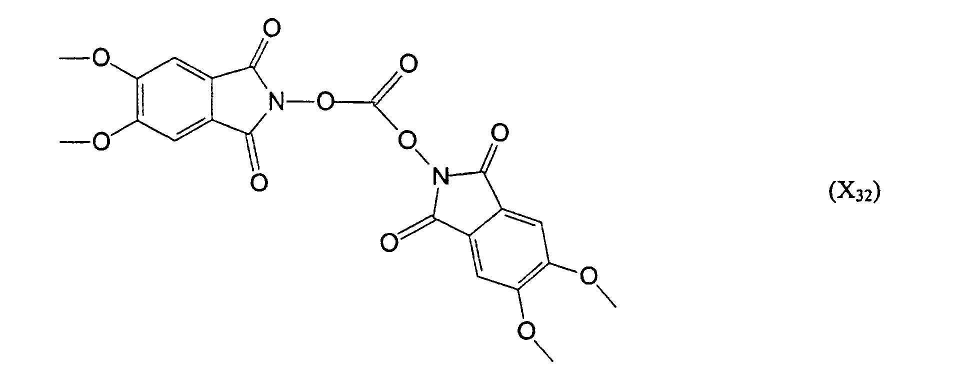 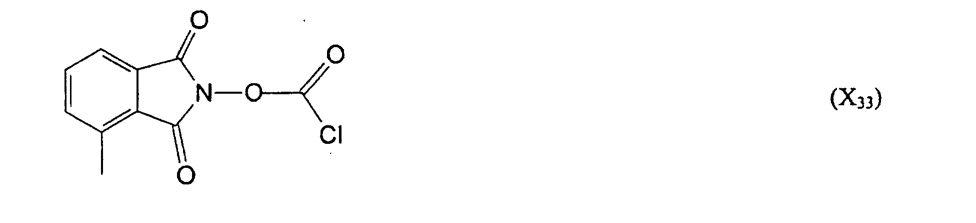 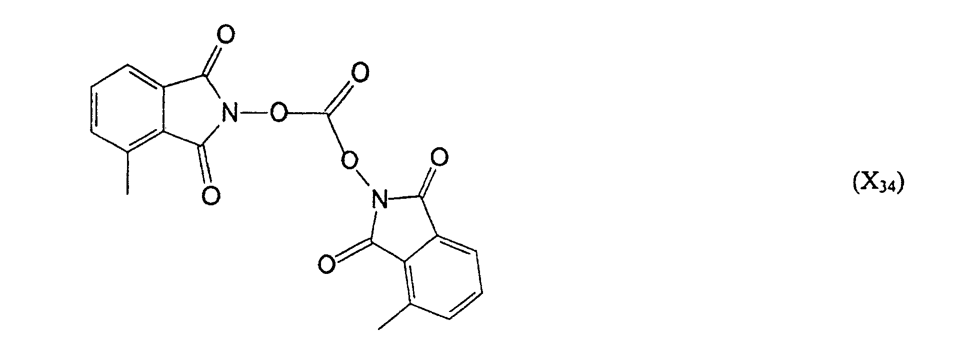 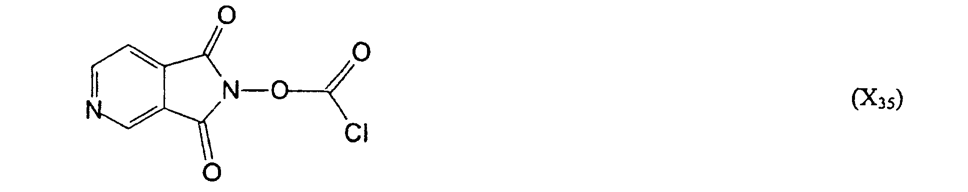 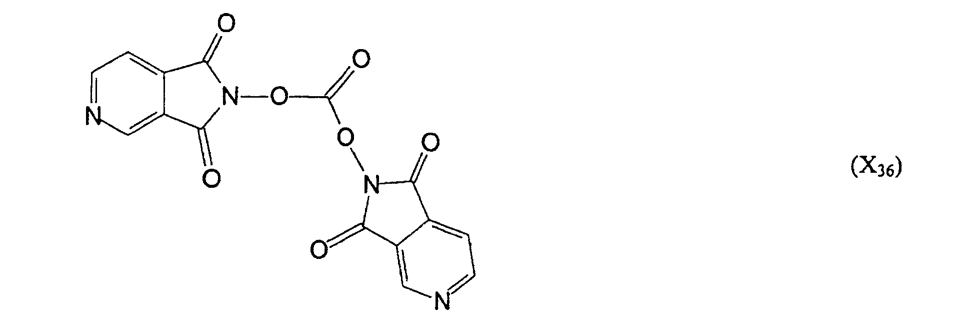 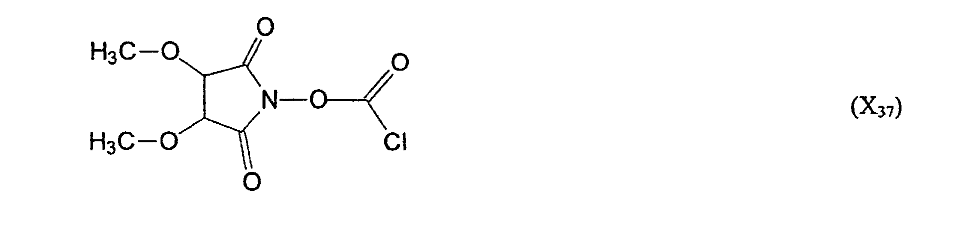 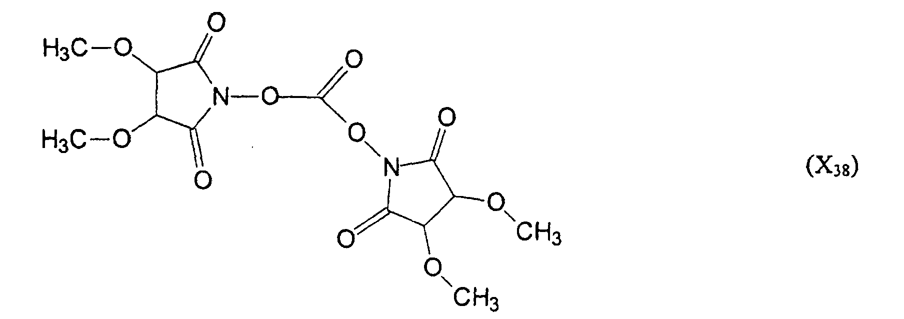 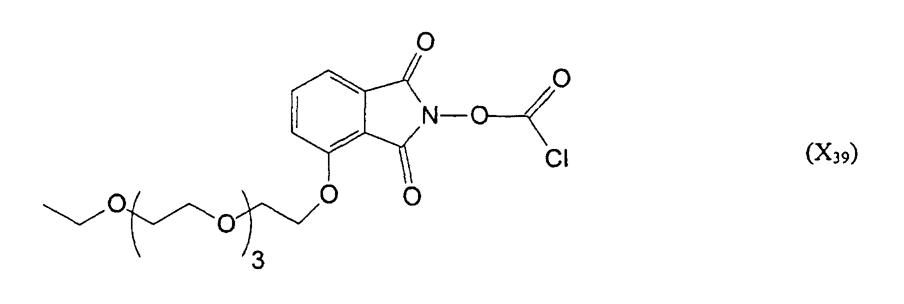 wobei R"' für Wasserstoff oder für einen geradkettigen oder verzweigtkettigen, gegebenenfalls substituierten Alkyl-, Aryl- oder Aralkylrest mit bis zu 30 C-Atomen steht.

Die Vernetzung gemäß (iii) kann im Rahmen der vorliegenden Erfindung beispielsweise dadurch erreicht werden, daß zwei oder mehr Stränge von derivatisiertem oder underivatisiertem Polymer direkt miteinander reagieren. Dies kann beispielsweise dadurch erreicht werden, daß die durch Derivatisierung eingeführten Gruppen so beschaffen sind, daß zwischen diesen Gruppen kovalente und/oder nicht-kovalente Bindungen geknüpft werden können. Ganz allgemein ist es denkbar, daß diese kovalenten und/oder nicht-kovalenten Bindungen zwischen Gruppen ausgebildet werden, die an einem Polymerstrang hängen, und/oder zwischen Gruppen ausgebildet werden, die an zwei oder mehr Polymersträngen hängen, so daß durch die Vernetzung zwei oder mehr Polymerstränge über eine oder mehrere Stellen miteinander verknüpft sein können.

Selbstverständlich kann auch die Bindung des mindestens einen Polymers an das Trägermaterial über funktionelle Gruppen erfolgen, die im Polymer selbst vorhanden sind oder durch geeignete Derivatisierung, wie oben beschrieben, in das Polymer eingeführt wurden.

Ebenso ist es auch denkbar, zur Vernetzung ein oder mehrere geeignete Vernetzungsreagenzien einzusetzen, mit denen, wie vorstehend beschrieben, in kovalenter und/oder nicht-kovalenter Weise Gruppen innerhalb eines Polymerstrangs und/oder Gruppen, die an mehreren Strängen von gegebenenfalls unterschiedlichen, gegebenenfalls derivatisierten Polymeren hängen, vernetzt werden können.

Hierbei ist es unter anderem möglich, bereits bei der Auswahl des mindestens einen Polymers dessen Beschaffenheit auf die spätere Vernetzung hin zu konzipieren. Weiter ist es im Rahmen der vorliegenden Erfindung insbesondere möglich, bereits bei der Derivatisierung das Derivatisierungsreagenz hinsichtlich seiner chemischen Beschaffenheit unter anderem im Hinblick auf die spätere Vernetzung zu konzipieren. Insbesondere kann das Derivatisierungsreagens Gruppen enthalten, die für die kovalente und/oder nicht-kovalente Vernetzung selektiv sind.

Als Vernetzungsreagenzien kommen prinzipiell alle geeigneten, aus dem Stand der Technik bekannten Verbindungen in Betracht. Demgemäß kann die Vernetzung beispielsweise in kovalent-reversibler Weise, in kovalent-irreversibler Weise oder in nicht-kovalenter Weise erfolgen, wobei bei Vernetzung in nicht-kovalenter Weise beispielsweise Vernetzungen über ionische Wechselwirkung oder über Charge-Transfer-Wechselwirkung zu nennen sind. Derartige Vemetzungsverfahren bzw. -reagenzien sind u.a. in Han, K.K., et al., Int. J. Biochem., 16, 129 (1984), Ji, T.H., et al., Meth. Enzymol., 91, 580 (1983) und Means, G. and Feeney, R.E., Bioconj. Chem., 1, 2 (1990) beschrieben.

Bezüglich der nicht-kovalenten Vernetzung seien als Beispiel etwa die Vernetzung durch Verschiebung des pH-Wertes genannt, wenn mindestens eine basische und mindestens eine saure Gruppe miteinander vemetzt werden. Ebenso kann beispielsweise eine nicht-kovalenten Vernetzung erfolgen, wenn im Falle, daß zwei basische Gruppen von beispielsweise Polyallylamin miteinander vernetzt werden, eine zweiwertige Säure wie beispielsweise Glutarsäure zugegeben wird, oder im Falle, daß zwei sauere Gruppen von beispielsweise Polyacrylsäure miteinander vemetzt werden sollen, eine zweiwertige Base wie beispielsweise Ethylendiamin zugegeben wird. Ebenso beispielhaft kann eine nicht-kovalente Vemetzung durch komplexbildende Metallionen oder durch Metallkomplexe mit freien Koordinationsstellen ausgebildet werden. Bevorzugt ist die nicht-kovalente Vernetzung reversibel und kann daher in einer bevorzugten Verwendung der erfindungsgemäß hergestellten polymeren Netzwerke für schnelle systematische Wechselwirkungsstudien eingesetzt werden. Ganz allgemein kann bezüglich der nicht-kovalenten Vernetzung auf sämtliche möglichen Wechselwirkungen verwiesen werden, die bereits oben hinsichtlich der Wechselwirkung zwischen Templat und polymerer Struktur dargestellt wurden.

Bezüglich der kovalent-reversiblen Fixierung sind unter anderem beispielhaft die Bindung über Disulfidbrücken oder über labile Ester oder Imine wie beispielsweise Schiffsche Basen oder Enamine genannt.

Die Kettenlänge der Vemetzungsreagenzien ist im allgemeinen beliebig und den Erfordernissen des jeweiligen Verfahrens anpaßbar. Bevorzugt liegt die Kettenlänge bei Vernetzungsreagenzien, die eine Kohlenstoffkette aufweisen, im Bereich von 2 bis 24 C-Atomen, besonders bevorzugt im Bereich von 2 bis 12 C-Atomen und besonders bevorzugt im Bereich von 2 bis 8 C-Atomen.

Als Vemetzungsreagenzien, die zu kovalent-irreversibler Vernetzung führen können, sind unter anderem zwei- oder mehrfach funktionelle Verbindungen wie beispielsweise Diole, Diamine oder Dicarbonsäuren zu nennen. Dabei werden beispielsweise zweiwertigen Vemetzer mit dem aktivierten Polymerderivat umgesetzt oder das mindestens zweiwertige aktivierte Vemetzungsreagens mit dem nicht-aktivierten Polymerderivat. Eine kovalent-reversible Vernetzung kann beispielsweise durch Knüpfen einer Schwefel-Schwefel-Bindung zu einer Disulfidbrücke zwischen zwei an einem oder zwei Polymersträngen hängenden Gruppen oder durch Bildung einer Schiffschen Base realisiert werden. Eine Vernetzung über ionische Wechselwirkung kann beispielsweise über zwei Reste zustandekommen, von denen der eine als Struktureinheit ein quartäres Ammoniumion und der andere als Struktureinheit beispielsweise

―COO⁻ oder ―SO₃⁻

aufweist. Eine Vernetzung über Wasserstoffbrücken kann beispielsweise zwischen zwei komplementären Basenpaaren ausgebildet werden, beispielsweise über folgende Struktur: 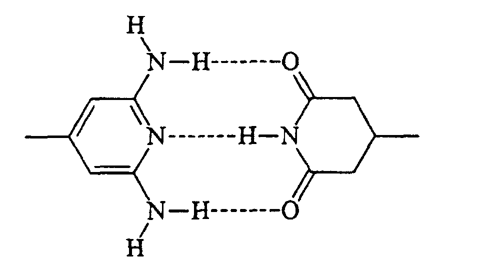 Ganz allgemein können nicht-kovalent zu vemetzende Polymere bezüglich der Vemetzungsstellen komplementär aufgebaut sein, wobei zueinander komplementäre Struktureinheiten beispielsweise Säure / Triamin oder Uracil / Melamin sind. Ebenso kann bei einer nicht-kovalenten Vernetzung das Vernetzungsreagenz komplementär zu den Vemetzungsstellen am Polymerstrang sein. Als Beispiel hierfür wären etwa eine Amingruppe am Polymerstrang und eine Dicarbonsäure als Vemetzungsreagens zu nennen.

Ist es Rahmen des erfindungsgemäßen Verfahren erforderlich, daß hinsichtlich eines Vernetzungsschrittes mindestens eine der funktionellen Gruppen, die an der Vemetzung beteiligt sind, zu aktivieren, so ist dies im wesentlichen nach allen Verfahren, die aus dem Stand der Technik bekannt sind, denkbar. Insbesondere kann die Aktivierung einer funktionellen Gruppe gemäß einem Verfahren erfolgen, wie es obenstehend bei der Aktivierung und Derivatisierung von Polymeren ausführlich beschrieben ist.

Erfolgt im erfindungsgemäßen Verfahren die Vernetzung über den Einsatz mindestens einen Vernetzungsreagenz, so kann dieses Vemetzungsreagenz insbesondere eine Kondensationsverbindung sein, die durch Umsetzung mindestens einer funktionellen Gruppe einer mindestens zwei funktionelle Gruppen aufweisenden ersten niedermolekularen Verbindung mit mindestens einer funktionellen Gruppe mindestens einer weiteren, mindestens zwei funktionelle Gruppen aufweisenden zweiten niedermolekularen Verbindung, die gleich der ersten oder verschieden von der ersten niedermolekularen Verbindung sein kann, unter Erhalt einer Kondensationsverbindung hergestellt wird, wobei das Verfahren dadurch gekennzeichnet ist, daß mindestens eine der an dieser Umsetzung beteiligten funktionellen Gruppen vor der Umsetzung durch Reaktion mit einer Verbindung Struktur (X) 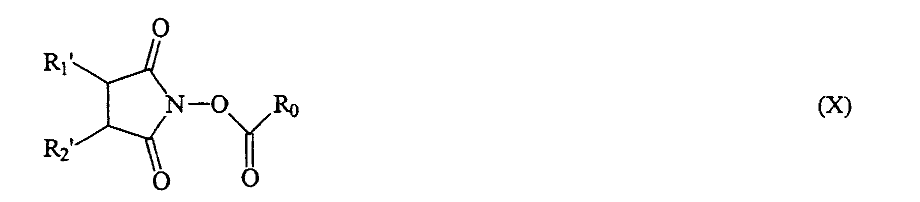 wie oben definiert, aktiviert wurde

Als (aktivierte) Vernetzungsreagenzien sind im folgenden beispielhaft Verbindungen der folgenden Strukturen (XI₁) bis (XI₁₇) genannt:

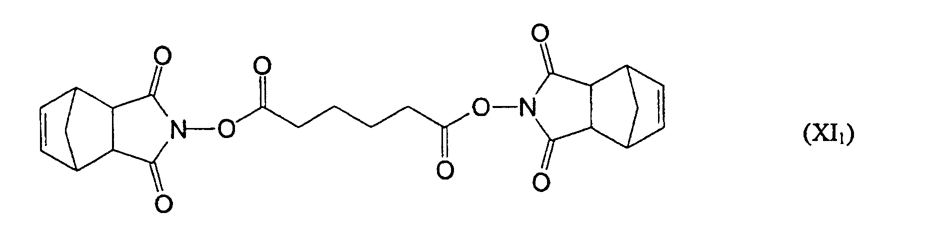

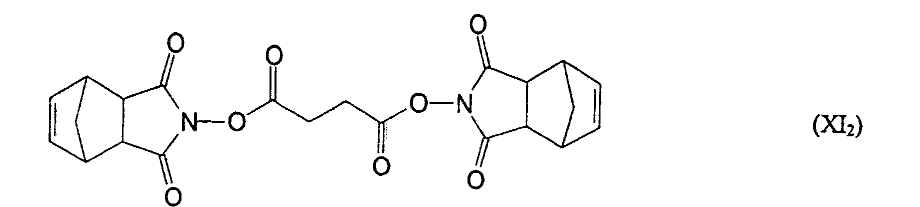

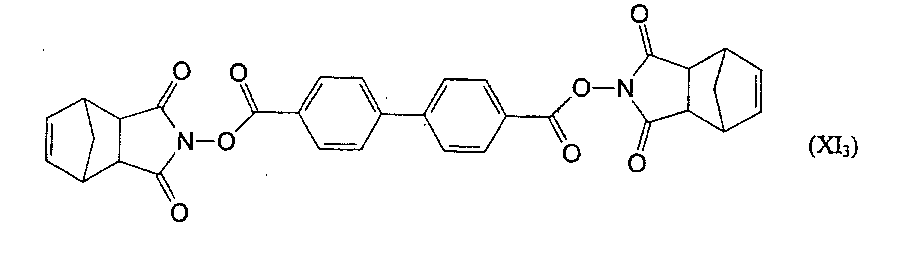

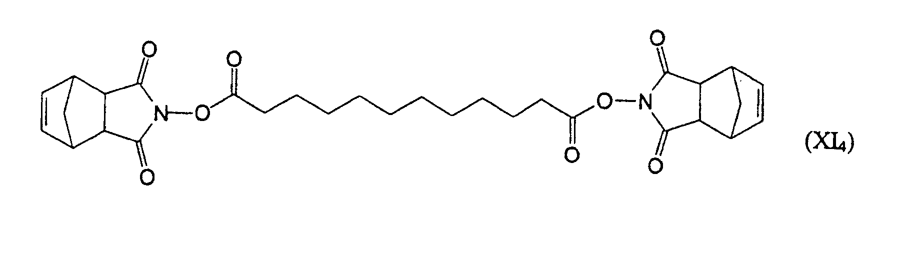

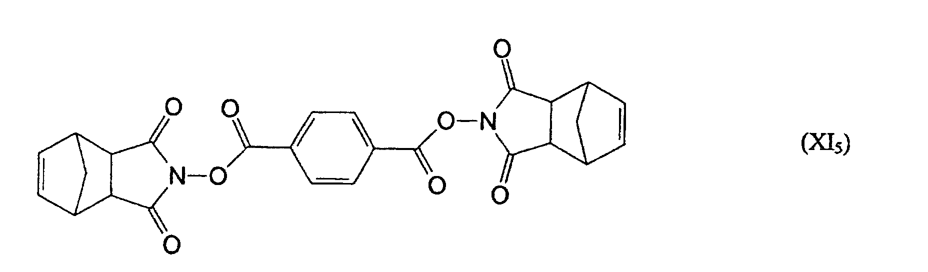

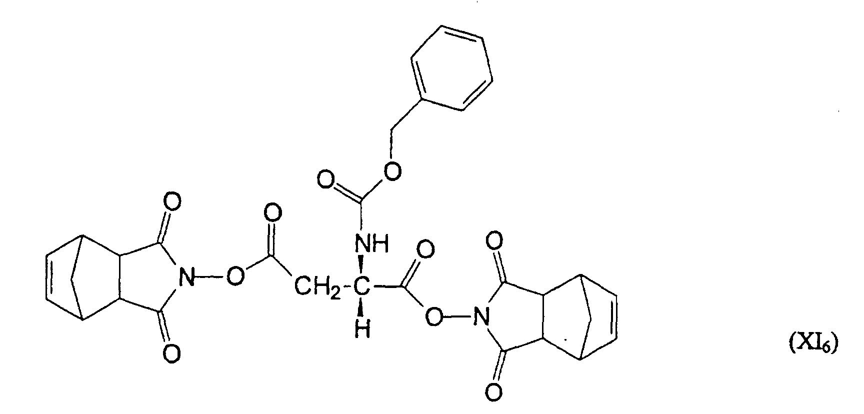

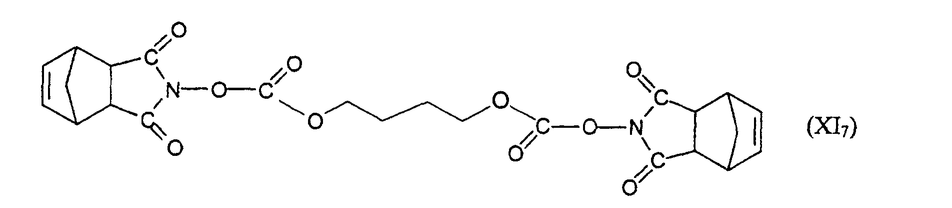

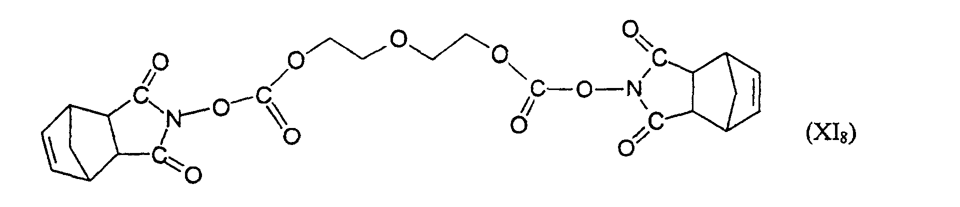

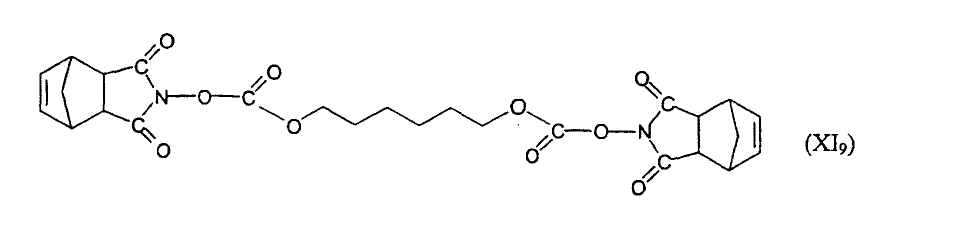

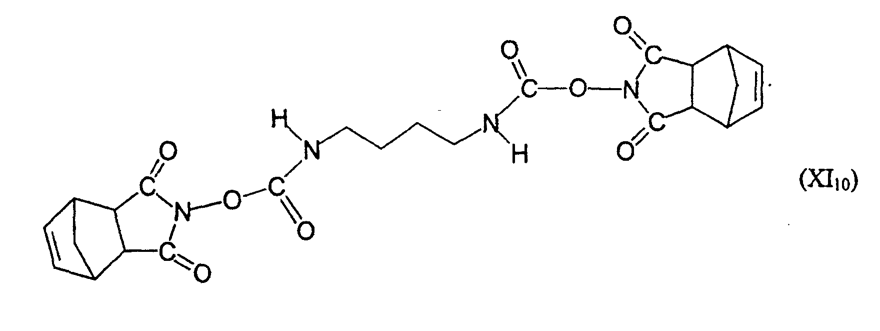

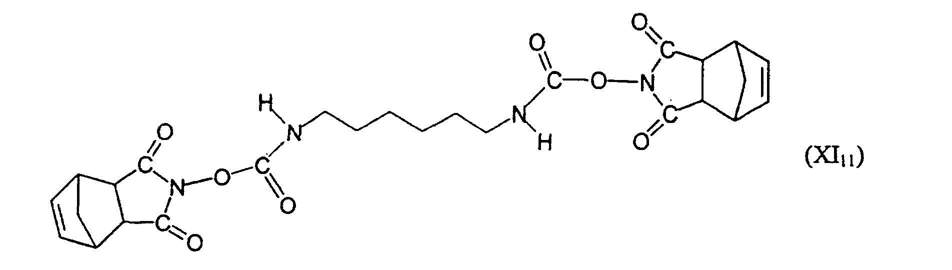

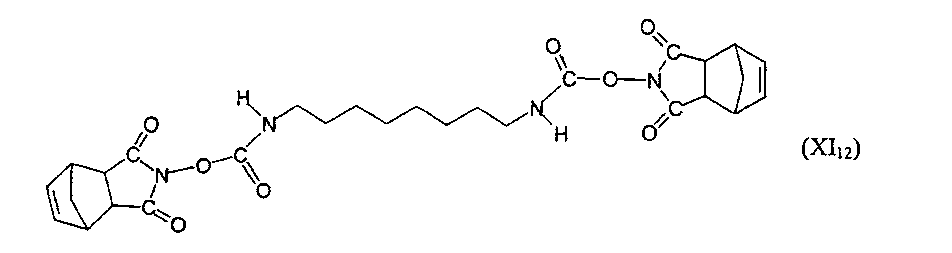

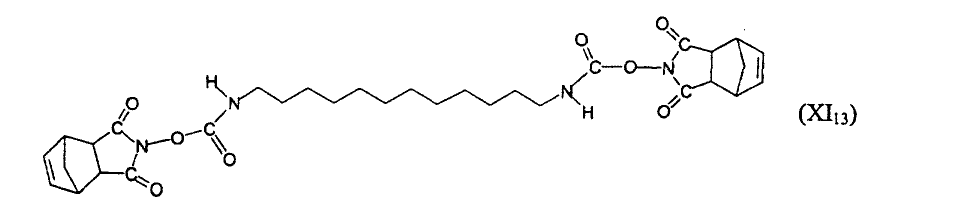

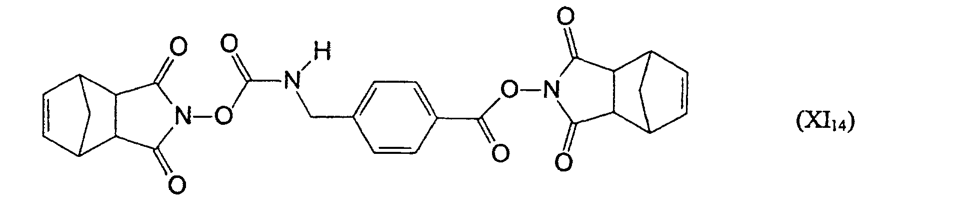

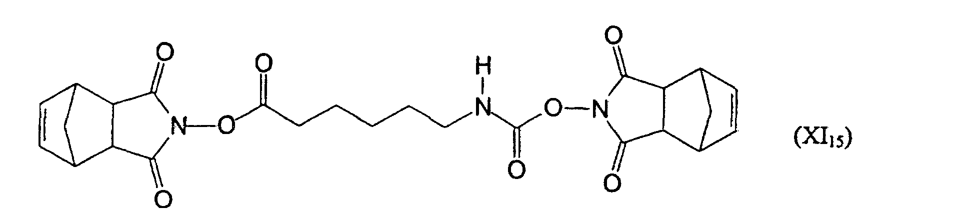

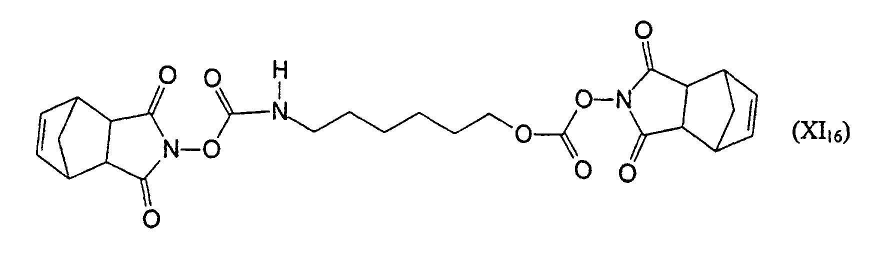

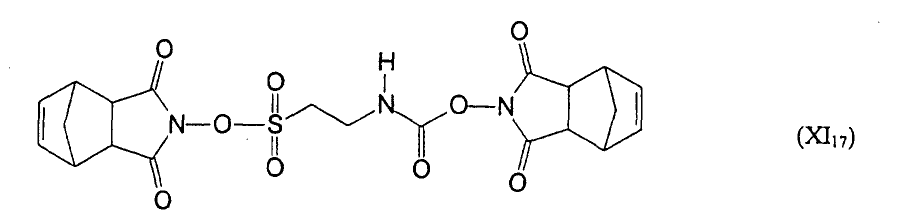

Als Beispiel für ein erfindungsgemäß zu verwendendes Vernetzungsreagenz sei im folgenden ein dimerer Vernetzer aufgeführt, der.nach dem oben beschriebenen Verfahren aus Phenylalanin und Leucin hergestellt wird:

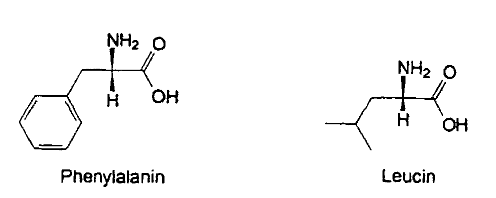

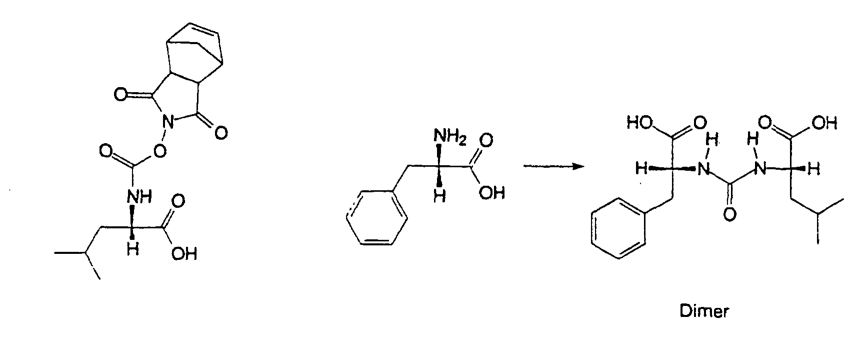

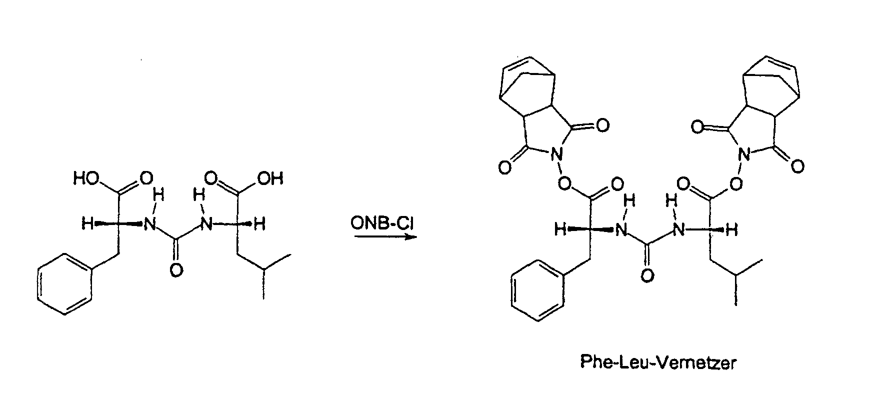

Als Beispiele für den Aufbau einer als Vernetzungsreagenz zu verwendenden Kondensationsverbindung nach dem erfindungsgemäßen Verfahrens seien folgende Reaktionswege (A) und (B) aufgeführt, in denen der Rest BNO die folgende Struktureinheit (XII) repräsentiert:

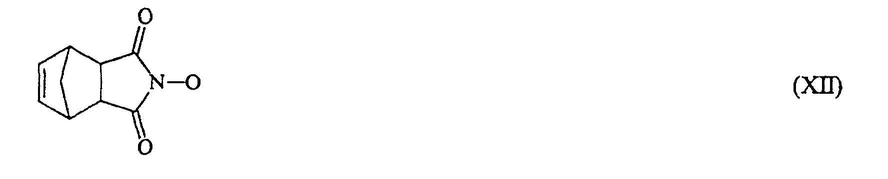

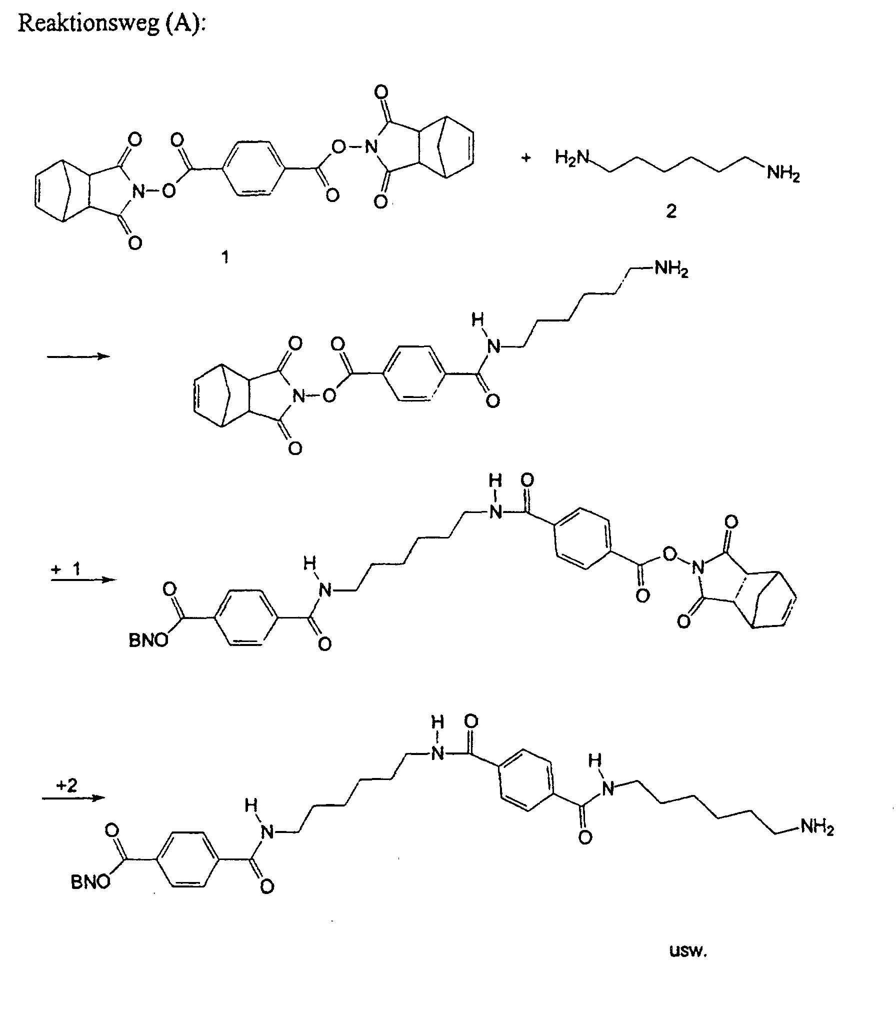

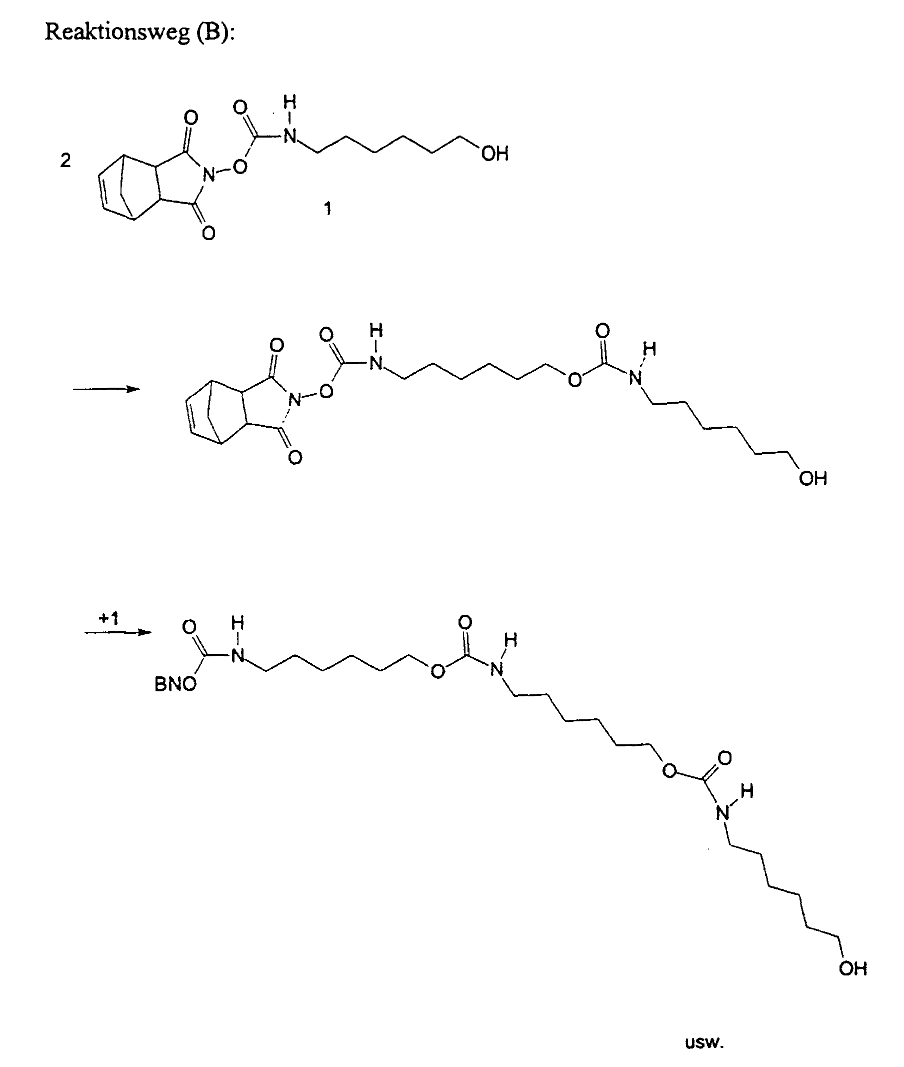

Über dieses Verfahren, in dem aktivierte oder nicht-aktivierte Vemetzungsreagenzien hergestellt werden können, ist es natürlich auch möglich, gezielt Polymere herzustellen, die in das erfindungsgemäße Verfahren eingesetzt und deren Konformation an mindestens eine Templatverbindung angepaßt werden kann. Hierbei ist es denkbar, daß durch dieses Verfahren, in dem eine Kondensationsverbindung aufgebaut wird, ein Polymer hergestellt wird, das nach dem bereits oben beschriebenen Verfahren derivatisiert wird. Ebenso ist es auch möglich, ein bereits derivatisiertes Polymer herzustellen.

Ganz allgemein können bei kovalenter Vemetzung unter anderem Ester-, Amid-, Carbonat-, Hydrazid-, Urethan- oder Harnstoffbindungen oder thioanaloge oder stickstoffhomologe Bindungen gebildet werden.

In einer bevorzugten Ausführungsform des erfindungsgemäßen Verfahrens wird gemäß (ii) die Konformation mindestens eines der Polymere in Anwesenheit mindestens einer der Templatverbindungen angepaßt.

Demgemäß betrifft die vorliegende Erfindung ein Verfahren, wie oben beschrieben, dadurch gekennzeichnet, daß die Anpassung gemäß (ii) in Anwesenheit mindestens einer der Templatverbindungen durchgeführt wird.

Hierbei ist es unter anderem denkbar, das mindestens eine Polymer in einem oder mehreren geeigneten Lösungsmitteln zu lösen oder zu suspendieren und mit der mindestens einen Templatverbindung zusammenzugeben.

Dabei ist unter anderem denkbar, das mindestens eine Polymer einer Lösung zuzugeben, in der die mindestens eine Templatverbindung gelöst in mindestens einem Lösungsmittel vorliegt, wobei die Templatverbindung auch in suspendierter Form vorliegen kann. Als Templatverbindung, die in suspendierter Form vorliegen kann, seien etwa Micropartikel genannt.

Unter anderem ist es weiter denkbar, die mindestens eine Templatverbindung einer Lösung zuzugeben, in der das mindestens eine Polymer in gelöster oder suspendierter Form in mindestens einem Lösungsmittel vorliegt.

Selbstverständlich können auch zwei oder mehr Lösungen zusammengegeben werden, wobei in mindestens einer Lösung das mindestens eine Polymer in gelöster oder suspendierter Form und in mindestens einer weiteren Lösung die mindestens eine Templatverbindung in gelöster oder suspendierter Form vorliegt.

Sollten zwei oder mehr voneinander verschiedene Polymere und/oder zwei oder mehr verschiedene Templatverbindungen eingesetzt werden, so kann jedes Polymer und/oder jede Templatverbindung in einem oder mehreren geeigneten Lösungsmitteln separat gelöst oder suspendiert werden und die einzelnen Lösungen und/oder Suspensionen zusammengegeben werden.

In diesem Zusammenhang sind auch Ausführungsformen denkbar, in denen eine Lösung eingesetzt wird, die zwei oder mehr Lösungsmittel aufweist, in denen das mindestens eine Polymer und/oder die mindestens eine Templatverbindung sowohl in gelöster als auch in suspendierter Form vorliegt.

Selbstverständlich kann auch von einer Templatverbindung ausgegangen werden, die bereits an mindestens einem Polymer gebunden vorliegt, beispielsweise in Form eines Komplexes oder kovalent, bevorzugt kovalent-reversibel gebunden. Dabei kann das Polymer, an das die Templatverbindung gebunden ist, ein Polymer sein, dessen Konformation im weiteren Verfahren an diese oder eine andere Templatverbindung angepaßt wird. Ebenso ist es denkbar, daß über dieses Polymer die Templatverbindung in das Verfahren eingebracht wird, die Konformation des Polymers jedoch im weiteren nicht an diese oder eine andere Templatverbindung angepaßt wird, wobei das Polymer im polymeren Netzwerk verbleibt oder durch ein geeignetes Verfahren aus dem polymeren Netzwerk entfernt wird.

In einer Ausführungsform des erfindungsgemäßen Verfahren wird mindestens eine Konformation des mindestens einen Polymers, die sich in der Lösung oder in der Suspension oder in Lösung und Suspension in Anwesenheit der mindestens einen Templatverbindung ausbildet, durch Vernetzung fixiert. Bezüglich der Vernetzung sind sämtliche geeignete Methoden denkbar.

In einer Ausführungsfbrm des erfindungsgemäßen Verfahrens werden zu der Lösung oder der Suspension oder der Lösung und Suspension ein oder mehrere Vernetzungsreagenzien zugegeben.

In einer weiteren Ausführungsform des erfindungsgemäßen Verfahrens wird die Vernetzung derart durchgeführt, daß zwischen mindestens einer funktionellen Gruppe mindestens eines Polymers und einer oder mehreren funktionellen Gruppen mindestens eines weiteren Polymers eine oder mehrere kovalente oder nicht-kovalente oder kovalente und nicht-kovalente Bindungen gebildet werden. In diesem Fall sind die Reaktionsbedingungen vorzugsweise so zu wählen, daß zuerst die Konformation mindestens eines der Polymere an mindestens eine der Templatverbindungen angepaßt wird und anschließend durch spezielle Wahl der Reaktionsbedingungen die erhaltene Vorzugskonformation durch Vernetzung fixiert wird.

Die funktionellen Gruppen der jeweiligen Polymere, zwischen denen die Bindungen ausgebildet werden, können hierbei im jeweiligen Polymerstrang selbst vorliegen. Ebenso ist es auch denkbar, daß mindestens eine der beteiligten funktionellen Gruppen Bestandteil einer oder mehrerer Seitenketten des jeweiligen Polymers ist. Ebenso kann auch mindestens eine Seitenkette mindestens eines der beteiligten Polymere zwei oder mehr funktionelle Gruppen aufweisen, die zur Ausbildung der kovalenten oder nicht-kovalenten Bindungen befähigt sind.

Selbstverständlich sind auch Verfahrensführungen denkbar, bei denen zwei oder mehr funktionelle Gruppen der beteiligten Polymere, die gleich oder verschieden voneinander sein können, unter Ausbildung mindestens einer kovalenten oder nicht-kovalenten Bindung direkt intra- oder intermolekular miteinander reagieren und zwei oder mehr funktionelle Gruppen der beteiligten Polymere, die ebenfalls gleich oder verschieden voneinander sein können, über mindestens ein Vernetzungsreagenz intra- oder intermolekular vernetzt werden.

Selbstverständlich umfaßt die vorliegende Erfindung auch Ausführungsformen, in denen beispielsweise mindestens zwei gleichartige oder verschiedenartige Vemetzungsreagenzien zuerst miteinander unter Ausbildung mindestens einer kovalenten oder/und nicht-kovalenten Bindung und unter Erhalt eines neuen Vernetzungsreagenzes reagieren. Das gebildete neue Vemetzungsreagenz kann dann entweder mit zunächst mindestens einer funktionellen Gruppe mindestens eines Polymers und anschließend mit mindestens einer weiteren funktionellen Gruppe mindestens eines weiteren Polymers reagieren. Ebenso können diese Reaktionen des neuen Vernetzungsreagenzes auch gleichzeitig ablaufen. Selbstverständlich umfaßt die vorliegende Erfindung auch Ausführungsformen, in denen die Anpassung gemäß (ii) über die Fixierung gemäß (iii) erfolgt, so daß in diesem Fall (ii) und (iii) als mindestens ein gemeinsamer Schritt zu sehen sind.

Die Vemetzung über die Reaktionen zwischen zwei oder mehr funktionellen Gruppen mit oder ohne Vemetzungsreagenz können selbstverständlich sowohl intra- als auch intermolekular erfolgen. Demgemäß umfaßt die vorliegende Erfindung auch Ausführungsformen, in denen ausschließlich intramolekulare oder ausschließlich intermolekulare Vernetzungen stattfinden. Weiter umfaßt die vorliegende Erfindung auch Verfahren, in denen sowohl intra- als auch intermolekular vemetzt wird, wobei im Fall, daß zwei oder mehr verschiedenartige Polymere eingesetzt werden, die intermolekularen Vernetzungen ausschließlich zwischen gleichartigen oder ausschließlich zwischen verschiedenartigen oder sowohl zwischen gleich- als auch verschiedenartigen Polymeren stattfinden.

In einer ebenfalls bevorzugten Ausführungsform des erfindungsgemäßen Verfahrens findet die Anpassung der Konformation des mindestens einen Polymers und die Fixierung der erhaltenen, mindestens einen Vorzugskonformation nebeneinander statt.

Dies ist beispielsweise derart realisierbar, daß das mindestens eine Vemetzungsreagenz zusammen mit der mindestens einen Templatverbindung in Kontakt mit dem mindestens einen Polymer gebracht wird.

Wird die Vernetzung ohne Vernetzungsreagenzien durchgeführt, so ist es beispielsweise denkbar, die Reaktionsbedingungen so zu wählen, daß die Anpassung der Konformation mindestens eines der Polymere und die Vernetzung nebeneinander stattfinden.

Ganz allgemein ist es denkbar, daß mindestens eines der eingesetzten Vemetzungsreagenzien mindestens eine funktionelle Gruppe aufweist, die nicht zur Ausbildung der kovalenten oder nicht-kovalenten Bindungen, die zur Vernetzung der Polymere führen, benutzt wird. Bezüglich dieser mindestens einen funktionelle Gruppe ist es wiederum denkbar, daß diese mit mindestens einer der Templatverbindungen wechselwirkt. Damit umfaßt das erfindungsgemäße Verfahren demzufolge auch Ausführungsformen, in denen neben mindestens einem Polymer auch mindestens ein Vernetzungsreagenz mit mindestens einer Templatverbindung wechselwirkt. Demnach ist es im Rahmen der vorliegenden Erfindung auch möglich, die Konformation mindestens eines der Polymere dadurch an die mindestens eine Templatverbindung anzupassen, daß sowohl das Polymer als auch das Vernetzungsreagenz, das das Polymer mit einem weiteren Polymer intermolekular oder das das Polymer intramolekular vernetzt, mit der mindestens einen Templatverbindung wechselwirkt.

Die gemäß (ii) erhaltene und gemäß (iii) fixierte Vorzugskonformation kann also auch durch das Vemetzungsreagenz beeinflußt werden, wobei unter anderem auch Ausführungsformen denkbar sind, gemäß denen eine Vorzugskonformation derart aufgebaut wird, daß Vernetzungsreagenz, Polymer und Templatverbindung vor der Fixierung in Wechselwirkung miteinander treten.

In einer bevorzugten Ausführungsform des erfindungsgemäßen Verfahrens wird hierbei so vorgegangen, daß zunächst bei tiefer Temperatur, bevorzugt im Bereich von 0 bis -70 °C, Vemetzungsreagenz, Polymer und Templatverbindung zusammengegeben werden, so daß die Wechselwirkungen ausgebildet werden, die Fixierung durch Vernetzung jedoch weitgehend unterbunden wird. In einem weiteren Schritt wird dann die Temperatur derart erhöht, daß die Fixierung stattfindet.

Im Rahmen des erfindungsgemäßen Verfahrens ist es darüber hinaus auch denkbar, daß die Vorzugskonformation gemäß (ii) nur aus Wechselwirkung mindestens eines der Vernetzungsreagenzien mit der mindestens einen Templatverbindung resultiert. Denkbar ist es demzufolge unter anderem, daß mindestens ein Vemetzungsreagenz zunächst mit mindestens einem Polymer unter Ausbildung mindestens einer kovalenten oder nicht-kovalenten Bindung reagiert, und gleichzeitig oder danach mit mindestens einer der Templatverbindungen in Wechselwirkung tritt, wodurch sich eine Vorzugskonformation des Reaktionsproduktes aus Vemetzungsreagenz und Polymer ausbildet, und diese Vorzugskonformation durch Reaktion des Reaktionsproduktes aus Vemetzungsreagenz und Polymer mit einem weiteren Polymer oder durch intramolekulare Vernetzung fixiert wird.

Daher beschreibt die vorliegende Erfindung auch ein Verfahren, wie oben beschrieben, das dadurch gekennzeichnet ist, daß die Vorzugskonformation gemäß (ii) durch Wechselwirkung mindestens eines Vemetzungsreagenzes mit mindestens einer Templatverbindung beeinflußt wird.

Natürlich ist es auch denkbar, daß die Vorzugskonformation dadurch entsteht, daß durch die Reaktion zweier oder mehr funktioneller Gruppen, die Bestandteile einer oder mehrerer Seitengruppen eines oder mehrerer Polymere sein können, eine Struktur entsteht, die mit mindestens einer Templatverbindung derart wechselwirkt, daß eine Vorzugskonformation entsteht, die durch Vernetzung mit mindestens einem Vernetzungsreagenz oder durch Reaktion von mindestens zwei funktionellen Gruppen des mindestens einen Polymers, das die Vorzugskonformation aufweist, fixiert wird.

In einer weiter bevorzugten Ausführungsform erfolgt im Rahmen des erfindungsgemäßen Verfahrens die Anpassung der Konformation gemäß (ii) in zwei oder mehr Schritten.

Demgemäß betrifft die vorliegende Erfindung auch ein Verfahren, wie oben beschrieben, dadurch gekennzeichnet, daß die Anpassung der Konformation des mindestens einen Polymers in mindestens zwei Schritten erfolgt.

Unter anderem ist es diesbezüglich beispielsweise denkbar, in einem ersten Schritt mindestens ein Polymer mit mindestens einer Templatverbindung nach einem Verfahren, wie oben ausführlich beschrieben, in Kontakt zu bringen und die Konformation des mindestens einen Polymers dadurch zu verformen. In einem zweiten Schritt kann dann beispielsweise mindestens eine weitere Templatverbindung, die beispielsweise von der mindestens einen, im ersten Schritt zugegebenen Templatverbindung verschieden ist, zugegeben werden. Dadurch ist es möglich, die Konformation des mindestens einen Polymers auch an die mindestens zweite Templatverbindung anzupassen.

Ebenso ist es denkbar, daß mindestens zwei voneinander verschiedene Polymere eingesetzt werden und durch Zugabe der mindestens einen Templatverbindung in einem ersten Schritt die Konformation eines Polymeren an die mindestens eine erste, durch Zugabe mindestens einer weiteren Templatverbindung in einem zweiten Schritt die Konfiguration des anderen Polymers an die mindestens eine weitere Templatverbindung angepaßt wird.

Ebenso ist es möglich, mehr als zwei voneinander verschiedene Polymere einzusetzen und in jeweils einem Schritt die Konformation eines Polymeren an die mindestens eine, in jeweils einem Schritt zugegebene Templatverbindung anzupassen.

Unter anderem denkbar ist es in diesem Zusammenhang, mehrere voneinander verschiedene Polymere einzusetzen und durch gezielte Wahl der Reaktionsbedingungen in einem Schritt die Konformation eines ersten Polymers an eine Templatverbindung anzupassen und in einem weiteren Schritt bei geänderten Reaktionsbedingungen die Konformation eines vom ersten verschiedenen Polymers an die gleiche Templatverbindung anzupassen. Dabei kann sowohl im ersten Schritt als auch im zweiten Schritt die Templatverbindung jeweils zugegeben werden. Denkbar ist aber auch, bereits im ersten Schritt soviel an Templatverbindung zuzugeben, daß für die Anpassung der Polymerkonformation in einem der folgenden Schritte keine Templatverbindung mehr zugegeben werden muß. Selbstverständlich umfaßt die vorliegende Erfindung auch eine Ausführungsform des Verfahrens, in dem sich in einem Schritt durch die Verformung die Reaktionsbedingungen von selbst dergestalt ändern, daß die Anpassung der Konformation des gleichen oder eines weiteren Polymers an die Templatverbindung ohne Beeinflussung der Reaktionsbedingungen von außen erfolgt. Unter anderem ist hier beispielsweise an Temperaturänderung oder/und Änderung der Viskosität im System zu denken. Ebenfalls ist es möglich, daß sich durch die Anpassung der Konformation in einem Schritt der Aggregatzustand eines der Reaktionspartner ändert. So ist es denkbar, daß durch Templatzugabe und Änderung der Konformation ein Polymer, das gelöst vorlag, als Feststoff in den suspendierten Zustand übergeht. Ebenso kann ein suspendiertes Polymer in Lösung gehen.

In einer bevorzugten Ausführungsform des erfindungsgemäßen Verfahrens wird in mindestens einem Schritt die Konformation des mindestens einen Polymers, die aus der Anpassung resultiert, durch Vernetzung fixiert. Daher beschreibt die vorliegende Erfindung auch ein Verfahren, wie oben beschrieben, dadurch gekennzeichnet, daß die Anpassung der Konformation gemäß (ii) in mindestens zwei Schritten erfolgt und die Konformation mindestens einmal durch Vernetzung fixiert wird.

Unter anderem ist es hierbei denkbar, daß in einem Schritt die Konformation mindestens eines Polymers, wie oben beschrieben, angepaßt wird und diese mindestens eine Konformation durch Vernetzung, wie oben beschrieben, fixiert wird. In einem weiteren Schritt wird mindestens eine Konformation des gleichen oder eines anderen Polymers an mindestens eine Templatverbindung angepaßt, wobei diese mindestens eine Templatverbindung gleich oder verschieden von der im ersten Schritt eingesetzten sein kann. Die Vorzugskonformation, die in diesem weiteren Schritt erhalten wird, kann entweder durch Vernetzung fixiert oder auch nicht fixiert werden.

In einer bevorzugten Ausführungsform des erfindungsgemäßen Verfahrens wird mindestens die Vorzugskonformation, die aus dem letzten Anpassungsschritt resultiert, durch Vernetzung fixiert. In einer weiter bevorzugten Ausführungsform werden gegebenenfalls vorhandene funktionelle Gruppen, die beispielsweise an der Außenseite des polymeren Netzwerkes liegen, mit mindestens einem Endcapping-Reagenz umgesetzt. Als Endcapping-Gruppe kann prinzipiell jede Gruppe gewählt werden, die eine funktionelle Gruppe inert oder weitestgehend inert gegen bestimmte Wechselwirkungen macht. Als Endcapping-Gruppe kann dabei jede geeignete Gruppe gemäß dem Stand der Technik verwendet werden. Je nach Substrat ist es beispielsweise denkbar, daß als Endcapping-Gruppe eine Gruppe gewählt wird, die kein H-Donor ist. Bevorzugt wird dabei 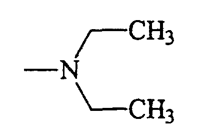 besonders bevorzugt 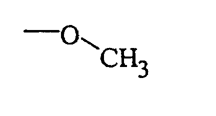 eingesetzt. Weiter bevorzugt werden sterisch anspruchsvolle Endcapping-Gruppen wie beispielsweise ein t-Butyl-Rest oder ein gegebenenfalls geeignet substituierter Benzylrest.

Durch das Endcapping-Verfahren oder durch eine andere geeignete nachträgliche Umsetzung ist es ganz allgemein möglich, zusätzliche, in der Regel unspezifische Wechselwirkungsstellen in das polymere Netzwerk einzuführen.

Ebenfalls bevorzugt ist ein Verfahren, in dem im Falle, daß die Anpassung in zwei oder mehr Schritten durchgeführt wird, nach jedem Schritt die aus diesem Schritt erhaltene Vorzugskonformation durch Vernetzung fixiert wird.

Daher betrifft die vorliegende Erfindung auch ein Verfahren, wie oben beschrieben, dadurch gekennzeichnet, daß nach jedem Schritt die aus diesem Schritt erhaltene Vorzugskonformation durch Vernetzung fixiert wird.

Bezüglich der Vorgehensweise kann auf die Anpassung und Vernetzung, wie sie oben beschrieben sind, verwiesen werden. Insbesondere ist es denkbar, bei einem Schritt die Anpassung und Vernetzung nacheinander oder gleichzeitig, wie dies ebenfalls oben beschrieben ist, durchzuführen.

Selbstverständlich ist es im Rahmen des erfindungsgemäßen Verfahrens auch denkbar, daß in einem oder auch mehreren Schritten, in denen die Konformation mindestens eines Polymers an mindestens eine Templatverbindung angepaßt wird, mindestens eine der Templatverbindungen nicht anwesend ist.

Daher betrifft die vorliegende Erfindung auch ein Verfahren, wie oben beschrieben, dadurch gekennzeichnet, daß mindestens ein Schritt in Abwesenheit der mindestens einen Templatverbindung durchgeführt wird.

So ist es unter anderem denkbar, daß durch intramolekulare Vernetzung eines Polymers oder zwei oder mehr verschiedener Polymere oder durch intermolekulare Vernetzung eines Polymers oder zwei oder mehr verschiedener Polymere die Konformation derart beeinflußt wird, daß die aus Vernetzung resultierende Vorzugskonformation an eine oder mehrere Templatverbindung angepaßt ist. Insbesondere ist hierbei denkbar, daß die chemische Struktur der Polymere und/oder die spezifische Art des mindestens einen Vernetzungsreagenzes derart ausgewählt werden, daß die mindestens eine Vorzugskonformation, die aus der Vernetzung resultiert, an mindestens eine Templatverbindung angepaßt ist.

Weiter ist es diesbezüglich auch denkbar, daß in einem oder mehreren Schritten die Konformation in Abwesenheit der mindestens einen Templatverbindung ohne Vernetzung angepaßt wird. Hierbei ist es unter anderem denkbar, daß in einem ersten Schritt durch Zugabe von mindestens einem Vernetzungsreagenz die Konformation beeinflußt wird, ohne daß eine Vernetzung stattfindet, wobei hier auch die Fälle umfaßt sind, in denen beispielsweise ein Vernetzungsreagenz zwar mit einem oder mehreren Polymeren reagiert, die Vorzugskonformation aber noch nicht fixiert ist.

In einer bevorzugten Ausführungsform wird das erfindungsgemäße Verfahren derart durchgeführt, daß die mindestens eine Vorzugskonformation, die aus jedem Schritt erhalten, gleichgültig, ob die Anpassung in An- oder Abwesenheit der mindestens einen Templatverbindung erfolgt, durch Vernetzung fixiert wird.

Hinsichtlich der Ausführungsform, bei der in einem oder mehr Schritten, in der eine Anpassung erfolgt, die mindestens eine Templatverbindung nicht anwesend ist, ist es unter anderem denkbar, die mindestens eine Konformation des mindestens einen Polymers schrittweise an die mindestens eine Templatverbindung anzupassen. In einem ersten Schritt kann dabei beispielsweise eine Konformation fixiert werden, die an die mindestens eine Templatverbindung nur grob angepaßt ist. In einem weiteren Schritt kann die im ersten Schritt fixierte Konformation erneut beeinflußt und die erhaltene Konformation fixiert werden, die an die mindestens eine Templatverbindung nun besser angepaßt ist als die im ersten Schritt fixiert Konformation. Dies Verfahren kann solange fortgeführt werden, bis die Konformation der gewünschten Vorzugskonformation entspricht.

Für diese schrittweise Anpassung der Konformation können sämtliche geeigneten Verfahren eingesetzt werden.

Als Beispiel für eine schrittweise Anpassung sei unter anderem die Möglichkeit erwähnt, bei einem bestimmten Schritt einen oder mehr Vemetzer einzusetzen, dessen oder deren Kettenlänge kürzer ist als die der Vernetzer des vorausgehenden Schrittes. Auf diese Art und Weise kann beispielsweise eine aus Vernetzung resultierende Konformation in Form einer zwei- oder dreidimensionalen Pore schrittweise enger gezogen werden. Selbstverständlich umfaßt die vorliegende Erfindung auch Ausführungsformen des Verfahrens, bei denen in irgendzwei oder mehr Schritten die gleichen Vernetzer eingesetzt werden, wobei diese Vernetzer bei unterschiedlichen Schritten beispielsweise jeweils unterschiedliche Polymere vernetzen, an verschiedenen Stellen eines Polymers unterschiedliche intramolekulare Vernetzungen bewirken oder in einem Schritt eine intra-, in einem anderen Schritt eine intermolekulare Vernetzung bewirken.

Selbstverständlich ist es auch denkbar, statt der Kettenlänge oder zusätzlich zur Kettenlänge die chemische Struktur der Vernetzer zu ändern, so daß in verschiedenen Schritten jeweils verschiedene Polymere vernetzt werden können oder/und Polymere jeweils an verschiedenen Stellen intra- oder/und intermolekular miteinander vemetzt werden können. Weiter umfaßt die vorliegende Erfindung auch Ausführungsformen, in denen in einem ersten Schritt vernetzt wird und irgendeinem weiteren Schritt eine Vernetzung stattfindet, die dadurch realisiert wird, daß das mindestens eine Vernetzungsreagenz, durch das im weiteren Schritt vernetzt wird, bei der Vernetzung beispielsweise mit mindestens einer funktionellen Gruppe reagiert, die durch die Vernetzung in ersten Schritt entstehen oder durch mindestens eines der Vernetzungsreagenzien, die im ersten Schritt eingesetzt werden, in die polymere Struktur, die aus dem ersten Vemetzungsschritt erhalten wurde, eingebracht werden.

Ganz allgemein können bei einer schrittweisen Anpassung bei jedem Schritt die Art des mindestens einen Vernetzungsreagenzes, die Konzentration mindestens eines der Vernetzungsreagenzien variiert werden. Ebenso ist es auch denkbar, stattdessen oder/und zusätzlich die Reaktionsbedingungen wie Art des oder der Lösungsmittel, Druck, Temperatur, pH-Wert der Lösung oder/und der Suspension, in der die Vernetzung stattfindet oder ein oder mehrere weitere geeignete Parameter zu variieren.

Erfolgt die Anpassung und/oder die Fixierung in mehreren Schritten, so ist der Vemetzungsgrad, der pro Vemetzungsschritt erfolgt, im wesentlichen beliebig. In einer bevorzugten Ausführungsform liegt der Vernetzungsgrad pro Schritt im Bereich von 2 bis 5 %, wobei ein Gesamtvernetzungsgrad von bevorzugt 8 bis 30 % erreicht wird. Die Prozentangaben bezüglich eines Schrittes sind hierbei jeweils bezogen auf die Anzahl der Monomereinheiten einer Polymerkette, die nur mit einer weiteren Polymerkette vemetzt ist. Die Prozentangabe bezüglich des Gesamtvemetzungsgrades ist bezogen auf die Gesamtheit aller Monomereinheiten im polymeren Netzwerk. Für den Vernetzungsgrad einer Polymerkette, die mit zwei weiteren Polymerketten vemetzt ist, ergeben sich demgemäß Werte des Vemetzungsgrades pro Schritt im Bereich von 4 bis 10 %.

Durch die Vernetzung wird im Rahmen des erfindungsgemäßen Verfahrens ein polymeres Netzwerk aufgebaut, das zwei- oder dreidimensionale Zellen aufweist, über die die polymere Struktur mit der mindestens einen Templatverbindung wechselwirkt. Besonders bevorzugt wird der Vemetzungsgrad oder/und die Art des Vemetzungsreagenzes so gewählt, daß in diesen Wechselwirkungszellen der polymeren Struktur keine mehrlagigen Solvathüllen ausgebildet werden. Bevorzugt kann diese Eigenschaft der Wechselwirkungszellen durch die chemische Natur der verwendeten Polymere oder/und Vemetzungsreagenzien beeinflußt werden, indem beispielsweise hydrophile Gruppen bei Einsatz von polaren Lösungsmitteln den Lösungsmittelzugang zur Wechselwirkungszelle erschweren.

Was die spezifische Auswahl des mindestens einen eingesetzten Polymers, der Art des mindestens einen Vemetzungsreagenzes, die Variation der Kettenlänge oder/und der chemischen Struktur der Vernetzungsreagenzien, die erzielten Vernetzungsgrade und sämtliche weiteren Reaktionsparameter, wie beispielhaft obenstehend beschrieben, anbelangt, so können im erfindungsgemäßen Verfahren beispielsweise durch Computer-Modelling-Verfahren Voraussagen oder Abschätzungen getroffen werden.

Selbstverständlich ist es auch denkbar, daß sich die Reaktionsbedingungen, die für einen Schritt erforderlich sind, nicht von außen dem System aufgeprägt werden müssen, sondern sich im vorhergehenden Schritt von selbst einstellen. Beispielhaft seien hier etwa Temperaturänderungen durch exo- oder endotherme Reaktionen, Änderungen des pH-Wertes durch Reaktionsprodukte aus Vemetzungsreaktionen oder Übergang von homogener zu heterogener Reaktion genannt, der beispielsweise dann erfolgen kann, wenn ein Polymer oder irgendeine polymere Struktur durch Vernetzung nicht mehr gelöst, sondern als Feststoff suspendiert vorliegt.

Wird die schrittweise Anpassung und Fixierung in Anwesenheit der Templatverbindung durchgeführt, so ist es insbesondere denkbar, daß nach jedem Schritt die Templatverbindung aus der entstandenen polymeren Struktur entfernt wird und im nächsten Schritt die gleiche oder eine andere Templatverbindung wieder zugegeben wird. Die Templatverbindung kann diesbezüglich beispielsweise als Lösung durch Filtration, Osmose, Dialyse abgetrennt werden oder vom festen Träger abgetrennt werden.

Sämtliche Ausführungsformen, die obenstehend für Schritte beschrieben sind, die in Abwesenheit der mindestens einen Templatverbindung durchgeführt werden, können selbstverständlich auch in Schritten eingesetzt werden, in denen die mindestens eine Templatverbindung anwesend ist, sofern die Anwesenheit der mindestens einen Templatverbindung die spezifische Ausführungsform zuläßt.

In einer bevorzugten Ausführungsform wird in Abwesenheit der mindestens einen Templatverbindung in einem oder mehr Schritten durch Vernetzung eine polymere Struktur geschaffen, die an mehrere, voneinander verschiedene Templatverbindungen anpaßbar ist. Beispielsweise kann dies dadurch erfolgen, daß durch Vernetzung eine polymere Struktur erzeugt wird, die zwei- oder/und dreidimensionale Poren aufweist, die für dies Templatverbindungen zugänglich sind und wobei die chemische Struktur dieser Poren so beschaffen sind, daß die Templatverbindungen mit den Poren wechselwirken können. Unter anderem ist es hierbei denkbar, daß sämtliche Poren gleichartig, für sämtliche verschiedenen Templatverbindung zugänglich sind und so beschaffen sind, daß die Templatverbindungen mit diesen Poren wechselwirken können. Selbstverständlich ist es auch möglich, daß zwei oder mehr voneinander verschiedene Poren ausgebildet werden, wobei jede Porenart für mindestens eine der gewünschten Templatverbindungen zugänglich sein kann. Ebenso ist es möglich, daß ein Teil der Poren für die gewünschten Templatverbindungen nicht zugänglich ist, nach weiterer Anpassung, beispielsweise durch Vernetzung, wie oben beschrieben, für mindestens eine der gewünschten Templatverbindungen zugänglich gemacht wird.

In einer weiter bevorzugten Ausführungsform des erfindungsgemäßen Verfahren wird bei der Herstellung des polymeren Netzwerkes mindestens ein geeignetes Trägermaterial eingesetzt.

Der Begriff "geeignetes Trägermaterial" umfaßt hierbei sämtliche Trägermaterialien, die mit mindestens einem der eingesetzten Polymere oder/und mit mindestens einer Struktur, die aus mindestens einem Schritt, in dem die Anpassung gemäß (ii) oder/und Fixierung gemäß (iii) erfolgt, kovalent oder nicht-kovalent wechselwirken können. Ebenso umfaßt dieser Begriff sämtliche Trägermaterialien, die mit mindestens einem der eingesetzten Polymere oder/und mit mindestens einer Struktur, die aus mindestens einem Schritt, in dem die Anpassung gemäß (ii) oder/und Fixierung gemäß (iii) erfolgt, kovalent oder nicht-kovalent unter Verwendung mindestens eines Vernetzungsreagenzes vemetzt werden können.

Demgemäß sind unter anderem Trägermaterialien denkbar, die in dem mindestens einen Lösungsmittel, in dem das polymere Netzwerk hergestellt wird, löslich sind oder als Feststoff suspendiert vorliegen. Ebenso ist es denkbar, daß im Falle, daß während der Herstellung des polymeren Netzwerkes ein Lösungsmitteltausch erfolgt oder ein Lösungsmittel zugegeben wird, das mindestens eine Trägermaterial, das zunächst als Feststoff suspendiert vorliegt, in Lösung geht oder zunächst gelöst vorliegt und dann als Feststoff suspendiert vorliegt. Werden zwei oder mehr verschiedenartige Trägermaterialien eingesetzt, so können diese selbstverständlich getrennt voneinander in Lösung vorliegen oder als Feststoff suspendiert sein.

Im Falle, daß das mindestens eine Trägermaterial ein Feststoff ist, kann dessen Oberfläche im wesentlichen beliebig ausgeformt sein. Unter anderem sind beispielsweise ebene Oberflächen wie bei beispielsweise Glas- oder Metallplatten oder gekrümmte oder in poröse Körper eingebettete Oberflächen wie beispielsweise röhren- oder schwammartige Oberflächen wie in beispielsweise Zeolithen, Kieselgel oder Cellulose-Beads denkbar.

Insbesondere umfaßt die vorliegende Erfindung Ausführungsformen des erfindungsgemäßen Verfahrens, in dem das polymere Netzwerk auf mindestens einem dieser geeigneten Trägermaterialien hergestellt wird.

Demgemäß betrifft die vorliegende Erfindung auch ein Verfahren, wie oben beschrieben, dadurch gekennzeichnet, daß das polymere Netzwerk auf mindestens einem Trägermaterial hergestellt wird.

Unter anderem ist es hierbei denkbar, daß das polymere Netzwerk zunächst hergestellt wird und anschließend auf das mindestens eine Trägermaterial aufgebracht wird. Ebenso ist es denkbar, daß das polymere Netzwerk in Anwesenheit des mindestens einen Trägermaterials hergestellt wird und das polymere Netzwerk dann durch beispielsweise Vernetzung auf dieses oder ein anderes Trägermaterial aufgebracht wird. Erfolgt die Herstellung des polymeren Netzwerkes, wie oben beschrieben, in zwei oder mehr Stufen, so ist es denkbar, die polymere Struktur, die aus irgendeinem Schritt resultiert, mit dem mindestens einen Trägermaterial in Kontakt zu bringen und beispielsweise durch Vernetzung darauf aufzubringen. Werden zwei oder mehr verschiedene Trägermaterialien eingesetzt, so ist es möglich, diese zusammen oder auch getrennt voneinander einzusetzen. Bei einer schrittweisen Herstellung des polymeren Netzwerkes kann beispielsweise nach jedem Schritt Trägermaterial zugegeben werden, wobei gegebenenfalls jeweils unterschiedliches Trägermaterial eingesetzt werden kann.

Demgemäß eröffnet das erfindungsgemäße Verfahren auch die Möglichkeit, die Konformation des mindestens einen Polymers, die in mindestens einem Schritt an mindestens eine Templatverbindung angepaßt wird, über das mindestens eine Trägermaterial zu beeinflussen. Insbesondere kann das mindestens eine Trägermaterial ein Polymer oder ein polymeres Netzwerk sein, wobei auch ein erfindungsgemäß hergestelltes polymeres Netzwerk als Trägermaterial eingesetzt werden kann. Hierbei wird unter anderem ein allgemeines Kopierverfahren zugänglich, das es beispielsweise gestattet, eine Anzahl aufeinander folgender Positiv- und Negativabzüge herzustellen.

In einer bevorzugten Ausführungsform wird das polymere Netzwerk gemäß einem Verfahren hergestellt, in dem das mindestens eine Polymer schichtweise auf mindestens ein Trägermaterial aufgebracht wird.

Der Begriff "Schicht", wie er im Rahmen der vorliegenden Anmeldung verwendet wird, umfaßt hierbei unter anderem sowohl Schichten, in denen das mindestens Polymer in lockeren Knäueln aufgebracht wird, als auch Schichten, in denen das mindestens eine Polymer in weitgehend entknäuelter Form aufgebracht wird.

In einer ersten Ausführungsform wird das mindestens eine Polymer derart aufgebracht, daß es in weitgehend entknäuelter Struktur, aber möglichst dicht oberhalb des Theta-Punktes mit Trägermaterial oder/und bereits aufgebrachter Polymerlage in Kontakt gebracht wird. Bei dieser Ausführungsform wird für die Lösung, in der dieses mindestens eine Polymer gelöst und mit Trägermaterial oder/und Polymerlage in Kontakt gebracht wird, ein Lösungsmittel oder Lösungsmittelgemisch gewählt, in dem das Polymer weitgehend entknäuelt vorliegt, wobei selbstverständlich auch durch die spezifische Wahl anderer Reaktionsbedingungen wie beispielsweise Temperatur, Druck oder pH-Wert die entknäuelte Form des Polymers unterstützt werden kann. Hierbei erfolgt bevorzugt eine Optimierung zwischen Polymerentfaltung und möglichst großem Verteilungskoeffizienten des Polymers. Für diese bevorzugte Ausführungsform werden ganz besonders bevorzugt Polymere verwendet, die eine Molmasse von weniger als ungefähr 30.000 g/mol aufweisen. Durch diese Ausführungsform wird das Aufbringen von weitgehend monomolekularen Polymerlagen begünstigt.

In einer zweiten Ausführungsform werden Lösungsmittel oder Lösungsmittelgemisch oder andere Reaktionsbedingungen derart gewählt, daß das mindestens eine Polymer in der Lösung sich in der Nähe oberhalb des Theta-Punktes befindet. Durch diese spezielle Ausführungsform, die ganz besonders bevorzugt durch Polymere mit einer Molmasse im Bereich von mehr als ungefähr 30.000 g/mol begünstigt wird, ist es möglich, das Aufbringen des Polymers in lockeren Polymerknäueln zu begünstigen.

In einer dritten Ausführungsform werden Lösungsmittel oder Lösungsmittelgemisch oder andere Reaktionsbedingungen derart gewählt, daß das mindestens eine Polymer in der Lösung sich in der Nähe unterhalb des Theta-Punktes befindet. Hierbei ist es unter anderem möglich, aus dem mindestens einen Poylmer gebildete Nanopartikel aufzubringen.

Das Aufbringen in Schichten ist unter anderem dadurch möglich, daß mindestens ein geeignetes Trägermaterial mit einem geeigneten Polymer in Kontakt gebracht wird und sich das Polymer spontan bei den gewählten Reaktionsbedingungen in Schichten auf dem mindestens einen Trägermaterial anordnet, wobei mindestens eine Konformation des Polymers in An- oder Abwesenheit der mindestens einen Templatverbindung, wie oben beschrieben, angepaßt und fixiert werden kann. Ebenso ist es denkbar, zwei oder mehr verschiedene geeignete Polymere gleichzeitig einzusetzen, die sich bei den gewählten Reaktionsbedingungen spontan in Schichten auf dem Trägermaterial anordnen. Auch hier kann mindestens eine Konformation mindestens eines der Polymeren in An- oder Abwesenheit der mindestens einen Templatverbindung, wie oben beschrieben, angepaßt und fixiert werden.

Beim Aufbringen können prinzipiell alle, wie bereits oben beschriebenen Polymere eingesetzt werden. Bevorzugt liegt die Molmasse der eingesetzten Polymere im Bereich von 2.000 bis 100.000 g/mol, weiter bevorzugt im Bereich von 5.000 bis 30.000 g/mol.

Bevorzugt wird das schichtweise Aufbringen eines oder mehrerer Polymere in einzelnen Schritten durchgeführt.

Demgemäß betrifft die vorliegende Erfindung auch ein Verfahren, wie oben beschrieben, das dadurch gekennzeichnet ist, daß das mindestens eine Polymer in mindestens zwei aufeinander folgenden Schritten schichtweise auf das mindestens eine Trägermaterial aufgebracht wird.

Wie bereits oben beschrieben, ist es hierbei unter anderem denkbar, zunächst eine polymere Struktur herzustellen, die aus zwei oder mehr Schichten besteht, wobei dies in einem oder auch mehreren Schritten erfolgen kann. In einem oder mehr weiteren Schritten kann dann diese polymere Struktur auf das mindestens eine Trägermaterial aufgebracht werden, wobei gegebenenfalls in einem oder mehr weiteren Schritten mindestens eine weitere Schicht auf die polymere Struktur aufgebracht werden kann. Die Anpassung mindestens einer Konformation mindestens eines der beteiligten Polymere kann gemäß einer oder mehrerer der bereits oben beschriebenen Ausführungsformen erfolgen. Nachdem es im erfindungsgemäßen Verfahren möglich ist, Nanoteilchen herzustellen, ist es insbesondere denkbar, Nanoteilchen, die gelöst, kolloidal gelöst oder suspendiert vorliegen, auf das Trägermaterial aufzubringen.

In einer bevorzugten Ausführungsform werden in einem ersten Schritt eine oder mehrere Schichten mindestens eines Polymers auf mindestens ein Trägermaterial aufgebracht. In mindestens einem weiteren Schritt wird dann mindestens eine weitere Schicht auf die resultierende Struktur aufgebracht. Jede Schicht kann hierbei gleiche oder auch zwei oder mehr voneinander verschiedene Polymere umfassen. Die Anpassung mindestens einer Konformation mindestens eines der beteiligten Polymere kann gemäß einem oder mehreren der bereits oben beschriebenen Ausführungsformen erfolgen.

In einer besonders bevorzugten Ausführungsform erfolgt die schichtweise Aufbringung des mindestens einen Polymers auf das mindestens eine Trägermaterial gemäß einem Verfahren, in dem zunächst eine Schicht eines Polymers kovalent, bevorzugt nicht-kovalent auf mindestens ein Trägermaterial aufgebracht wird. In einem weiteren Schritt wird in An- oder Abwesenheit der mindestens einen Templatverbindung mindestens ein Vernetzungsreagenz derart zugegeben, daß die Vernetzer über mindestens eine funktionelle Gruppe mit dem auf das Trägermaterial aufgebrachten Polymer reagieren, so daß bevorzugt ein überwiegender Teil der Vernetzungsreagenzien in der Lage ist, jeweils über mindestens eine weitere funktionelle Gruppe eine Reaktion mit mindestens einem weiteren Polymer, das in der nächsten Schicht aufgebracht wird, zu reagieren. In einem nächsten Schritt wird dann eine weitere Schicht mindestens eines weiteren Polymers aufgebracht und durch Reaktion mit den bereits erwähnten funktionellen Gruppen mit der ersten Polymerschicht vemetzt. Daran können sich ein oder mehrere weitere Schritte anschließen, in denen jeweils Vemetzungsreagenz mit einer Polymerschicht reagiert, mindestens eine weiteres Polymer zugegeben wird und über Vernetzung mit der zuvor aufgebrachten Polymerschicht eine neue Polymerschicht gebildet wird. Jeder Schritt kann hierbei in An- oder Abwesenheit der mindestens einen Templatverbindung erfolgen.

Bei der schichtweisen Herstellung des polymeren Netzwerkes in An- oder Abwesenheit der mindestens einen Templatverbindung ist es unter Umständen erforderlich, bei der Ausbildung einer neuen Schicht Vernetzungen innerhalb mindestens einer der bereits auf das Trägermaterial aufgebrachten Schichten oder/und zwischen den Polymeren, die die neue Schicht bilden sollen, zu vermeiden. In diesem Zusammenhang sind drei besonders bevorzugte Ausführungsformen (a) bis (c) zu nennen, gemäß denen dieses schichtweise Aufbringen erfolgen kann, die bezüglich (a) und (b) weiter bevorzugt besonders bei nicht-spezifischen oder nichtselektiven Vemetzungsreagenzien angewendet werden können:
(a) In einer ersten Verfahrensvariante erfolgt die Umsetzung einer bereits aufgebrachten Polymerschicht mit dem mindestens einen Vemetzungsreagenz bei tiefer Temperatur, wobei das Vernetzungsreagenz vorwiegend an einem Ende abreagiert. Dann wird das mindestens eine, bevorzugt gelöste Polymer für die nächste Schicht zugefügt, wobei die Reaktionsbedingungen in geeigneter Weise so variiert werden, daß eine Reaktion überwiegend mit dem nun zugegebenen Polymer erfolgt.
(b) In einer zweiten Verfahrensvariante wird eine polymere Struktur, die eine oder mehrere Polymerschichten, aufgebracht auf mindestens ein Trägermaterial, umfaßt, mit einer Polymerlösung, aus der die zweite Polymerschicht gebildet werden soll, und mindestens einem Vernetzungsreagenz zusammengegeben. Durch eine geeignete Änderung der Reaktionsbedingungen, die langsam oder schnell erfolgen kann, werden Bedingungen eingestellt, bei denen das mindestens eine Vernetzungsreagenz gleichzeitig mit der bereits vorliegenden Polymerschicht und den Polymeren, die die nächste Schicht bilden sollen, unter Ausbildung dieser Schicht reagieren, wobei die zu vermeidende, oben beschriebene Vernetzung aus entropischen Gründen von der bevorzugten Vernetzung, die zur Ausbildung der neuen Schicht führt, übertroffen wird.
(c) In einer dritten Verfahrensvariante wird die Reaktion bei zwei unterschiedlichen Temperaturen oder pH-Werten oder Lösungsmitteln oder Lösungsmittelgemischen oder sonstigen Unterschieden in den Reaktionsbedingungen unter Verwendung eines spezifischen oder selektiven Vernetzers durchgeführt.

In einer ganz besonders bevorzugten Ausführungsform wird die Methode (a) so durchgeführt, daß das Vernetzungsreagenz bei Temperaturen mit der zuletzt aufgebrachten Polymerschicht in Kontakt gebracht wird, bei denen sich das Vemetzungsreagenz statistisch gleichmäßig über die bereits vorhandene Polymerschicht verteilt und bei denen eine Reaktion des Vemetzungsreagenzes mit der bereits vorhandenen Polymerschicht weitgehend Die Temperaturen, bei denen diesbezüglich gearbeitet wird, liegen im Regelfall im Bereich von 0 bis -70 °C.

Auch bei der Wahl der anderen Reaktionsbedingungen wie etwa pH-Wert, Art des Lösungsmittels, Konzentration des Vernetzungsreagenzes in dem Lösungsmittel wird in dieser bevorzugten Ausführungsform des Verfahrens darauf geachtet, daß die Reaktion des Vemetzunsreagenzes mit der vorhandenen Polymerschicht weitgehend unterbleibt, bis das Vernetzungsreagenz statistisch gleichmäßig über die bereits vorhandene Polymerschicht verteilt ist.

Durch entsprechende Variation der Reaktionsbedingungen wird in einem nächsten Schritt das statistisch gleichmäßig verteilte Vernetzungsreagenz mit der bereits vorhandenen Polymerschicht derart zur Reaktion gebracht, daß das Vemetzungsreagenz vorwiegend über eine oder mehrere funktionelle Gruppen reagiert und mindestens eine funktionelle Gruppe des Vemetzungsreagenzes, über die die Vernetzung zur nächsten Polymerschicht erfolgt, nicht mit der bereits vorhandenen Polymerschicht reagiert. Dies erfolgt in der Regel wiederum bei tiefen Temperaturen, wobei diese in der Regel im Bereich von 0 bis -10 °C liegen. Begünstigt wird dies weiter durch den Einsatz kurzkettiger Vernetzungsreagenzien oder/und der Immobilisierung der Polymerschicht. Möglichkeiten, wie diese Vernetzung unter anderem induziert werden kann, sind beispielsweise auch Anwendung von Ultraschall oder die photochemische Vernetzung.

Selbstverständlich ist es auch möglich, bei entsprechenden Vemetzungsreagenzien oder/und bei entsprechender, bereits vorhandener Polymerschicht, die vorstehend beschriebene Reaktionsführung durch Variation des pH-Wertes oder/und Variation der Lösungsmittel oder/und durch Zusatz von Modifiem zu steuern, wobei selbstverständlich auch Kombinationen einiger oder sämtlicher Methoden denkbar sind.

In diesem Zusammenhang kann auch auf die spezifischen Methoden verwiesen werden, die wie oben beschrieben angewendet werden können, um zunächst die Bindung eines Polymers zu unterbinden und in einem weiteren Schritt anzuregen.

Gemäß Methode (a) wird in einem nächsten Schritt eine Lösung, die das mindestens eine Polymer umfaßt, das als nächste Polymerschicht aufgebracht werden soll, mit dem Reaktionsprodukt aus Vernetzungsreagenz und bereits vorhandener Polymerschicht in Kontakt gebracht. Die Reaktionsbedingungen werden dann so geändert, daß die Reaktion besonders bevorzugt zwischen den nicht-abreagierten funktionellen Gruppen des an die bereits vorhandene Polymerschicht gebundenen Vernetzungsreagenzes und den als nächste Polymerschicht aufzubringenden Polymeren erfolgt. Unter anderem ist es hierbei auch denkbar, daß die Reaktionsbedingungen durch Zugabe der Lösung, die das mindestens eine Polymer umfaßt, das als nächste Polymerschicht aufgebracht werden soll, derart beeinflußt werden, daß eine weitere Änderung der Reaktionsbedingungen nicht mehr erfolgen muß.

Auch bezüglich dieses Schrittes des Aufbringens der nächsten Polymerschicht kann unter anderem auf die spezifischen Methoden verwiesen werden, die wie oben beschrieben angewendet werden können, um zunächst die Bindung eines Polymers zu unterbinden und in einem weiteren Schritt anzuregen.

In einer ebenfalls besonders bevorzugten Ausführungsform wird die Methode gemäß (b) derart durchgeführt, daß die Lösung, umfassend das mindestens eine Vernetzungsreagenz und das mindestens eine Polymer, mit der zuletzt aufgebrachten Lage des mindestens einen Polymers bei Reaktionsbedingungen in Kontakt gebracht wird, bei denen zunächst keine Reaktion erfolgt, sondern sowohl Vemetzungsreagenz als auch aufzubringendes Polymer sich statistisch gleichmäßig über die bereits vorhandene Polymerschicht verteilen.

Wie bereits im Zusammenhang mit der Methode (a) beschrieben, erfolgt dieses Inkontaktbringen in einer bevorzugten Ausführungsform bei tiefen Temperaturen, in der Regel im Bereich von 0 bis -70 °C.

Auch bei der Wahl der anderen Reaktionsbedingungen wie etwa pH-Wert, Art des Lösungsmittels, Konzentration des Vernetzungsreagenzes in dem Lösungsmittel oder Konzentration des aufzubringenden Polymers in dem Lösungsmittel wird in dieser bevorzugten Ausführungsform des Verfahrens darauf geachtet, daß die Reaktion des Vernetzunsreagenzes mit der vorhandenen Polymerschicht und die Reaktion des aufzubringenden Polymers mit dem Vernetzungsreagenz weitgehend unterbleibt und das Vemetzungsreagenz und das aufzubringende Polymer statistisch gleichmäßig über die bereits vorhandene Polymerschicht verteilt werden.

In einem nächsten Schritt werden die Reaktionsbedingungen dann derart geändert, daß das Vemetzungsreagenz sowohl mit der bereits vorhandenen Polymerschicht als auch mit dem Polymer, das als nächste Lage aufgebracht wird, reagiert. Hierbei ist es unter anderem denkbar, daß das Vemetzungsreagenz zunächst mit der bereits vorhandenen Polymerschicht und anschließend mit dem aufzubringenden Polymer unter Ausbildung der neuen Polymerschicht reagiert. Ebenso ist es denkbar, daß das Vemetzungsreagenz gleichzeitig mit der bereits vorhandenen Polymerschicht und dem aufzubringenden Polymer unter Ausbildung der neuen Polymerschicht reagiert. Weiter ist es möglich, daß das statistisch gleichmäßig verteilte Vernetzungsreagenz zunächst mit dem statistisch gleichmäßig verteilten Polymer reagiert und das Reaktionsprodukt anschließend mit der bereits vorhandenen Polymerschicht unter Ausbildung der neuen Polymerschicht reagiert. Erfolgen die Reaktionen des Vernetzungsreagenzes mit der bereits vorhandenen Polymerschicht einerseits und dem aufzubringenden Polymer andererseits nicht gleichzeitig, so ist es möglich, durch Variation der Reaktionsbedingungen zunächst eine der Reaktionen, durch weitere Variation der Reaktionsbedingungen die andere Reaktion durchzuführen.

Was die Veränderung der Reaktionsbedingungen anbelangt, so sei hier auf sämtliche, bereits oben beschriebenen Möglichkeiten und Kombinationen verwiesen. Insbesondere kann auch bezüglich dieses Schrittes des Aufbringes der nächsten Polymerschicht unter anderem auf die spezifischen Methoden verwiesen werden, die wie oben beschrieben angewendet werden können, um zunächst die Bindung eines Polymers zu unterbinden und in einem weiteren Schritt anzuregen. Möglichkeiten, wie diese Vemetzung unter anderem induziert werden kann, sind beispielsweise auch Anwendung von Ultraschall oder die photochemische Vemetzung.

Anwendung von Ultraschall oder die photochemische Vernetzung sind selbstverständlich Methoden, die ganz allgemeine bei jedem Vernetzungsschritt, wie er im Rahmen der vorliegenden Erfindung durchgeführt wird, prinzipiell eingesetzt werden können.

Unter dem Begriff "selektives / spezifisches Vernetzungsreagenz" wird im Rahmen der vorliegenden Erfindung ein Vernetzungsreagenz verstanden, das zwei oder mehr verschiedene funktionelle Gruppen aufweist, von denen mindestens eine Gruppe im Vergleich zu mindestens einer davon verschiedenen Gruppe bei gegebenen Reaktionsbedingungen mit einer funktionellen Gruppe eines weiteren Polymers oder dem Trägermaterial bevorzugt reagiert. Weiter umfaßt der Begriff solche Vernetzungsreagenzien, die zwei oder mehr gleiche funktionelle Gruppen aufweisen, deren chemische Umgebung sich jedoch unterscheidet oder/und die sterisch unterschiedlich angeordnet sind und von denen daher mindestens eine bei gegebenen Reaktionsbedingungen mit einer funktionellen Gruppe eines weiteren Polymers oder dem Trägermaterial bevorzugt reagiert. Ebenso umfaßt dieser Begriff solche Vemetzungsreagenzien, die gleiche oder voneinander verschiedene funktionelle Gruppen aufweisen, die sich in der Selektivität / Spezifität daher unterscheiden, weil ein Teil der funktionellen Gruppen nach einem Verfahren, wie oben beschrieben, mit einem Aktivierungsreagenz aktiviert ist. Selbstverständlich können bei den Verbindungen, die zwei oder mehr unterschiedliche funktionelle Gruppen aufweisen, eine oder auch mehrere der funktionellen Gruppen mit gegebenenfalls unterschiedlichen reaktiven Gruppen aktiviert sein, so daß sich die Reaktivität eines Teils der gegebenenfalls aktivierten Gruppen von der Reaktivität des anderen Teils der gegebenenfalls aktivierten Gruppen unterscheidet. Kombinationen von zwei oder mehr der beschriebenen Einflüsse, die sich auf die Spezifität / Selektivität auswirken, sind selbstverständlich ebenso denkbar.

In einer besonders bevorzugten Ausführungsform wird das schichtweise Aufbringen in An- oder bevorzugt Abwesenheit des Templates derart durchgeführt, daß ein Vemetzungsgrad zwischen den Schichten vorliegt, der zu einem unlöslichen, aber quellfähigen polymeren Netzwerk führt, das bevorzugt Wechselwirkungszellen aufweist, die zur Wechselwirkung mit der mindestens einen Templatverbindung befähigt sind. In diesen Wechselwirkungszellen liegen im allgemeinen die funktionellen Gruppen des quellfähigen polymeren Netzwerkes im Hinblick auf die Wechselwirkung mit der mindestens einen Templatverbindung durchschnittlich in einer nach Entfernung und Winkel günstigen sterischen Anordnung vor.

In einer weiter bevorzugten Ausführungsform wird die Konformation dieser quellfähigen polymeren Struktur in Anwesenheit der mindestens einen Templatverbindung an die mindestens eine Templatverbindung in mindestens einem Schritt angepaßt und durch Vernetzung fixiert.

Daher betrifft die vorliegende Erfindung auch ein Verfahren, wie oben beschrieben, dadurch gekennzeichnet, daß die schichtweise Aufbringung zu einem quellfähigen polymeren Netzwerk führt, das eine Konformation aufweist, die in mindestens einem weiteren Schritt in Anwesenheit der mindestens einen Templatverbindung an die mindestens eine Templatverbindung angepaßt und durch Vernetzung fixiert wird.

Bezüglich des schichtweisen Aufbringens auf mindestens ein Trägermaterial können sämtliche geeignete Vernetzungsreagenzien, wie sie bereits oben beschrieben wurden, eingesetzt werden.

Beispielhaft seien zweiwertige Epoxide, Isocyanate, Amidine, Chlortriazine oder Aldehyde genannt. Bevorzugt werden beispielsweise Succinimidderivate, besonders bevorzugt ONB- und N-Hydroxy-Phthalimid-aktivierte Reagenzien. In einer weiteren bevorzugten Ausführungsform werden bivalente, symmetrische oder unsymmetrische Vernetzungsreagenzien eingesetzt. Zu nennen sind hier etwa unter anderem aktivierte Dicarbonsäuren. In einer weiteren Ausführungsform werden spezifische beziehungsweise selektive Vemetzer eingesetzt. Dabei kann es sich beispielsweise um mehrwertige Carbonsäuren, Diamine, Diole oder weitere geeignete Verbindungen handeln, die mit unterschiedlichen reaktiven Gruppen aktiviert sind. Ebenso kann es sich hierbei um Verbindungen mit mindestens zwei voneinander verschiedenen funktionellen Gruppen handeln, die bei Aktivierung mit einer Verbindung oder mit zwei oder mehr voneinander verschiedenen Verbindungen an voneinander verschiedenen aktivierten Gruppen unterschiedliche Reaktivität aufweisen.

Die Kettenlänge der Vernetzungsreagenzien ist im wesentlichen beliebig und kann an die jeweiligen Erfordernisse der Reaktionsführung oder/und an die eingesetzten Polymere oder/und an die mindestens eine Templatverbindung angepaßt werden. Die Kettenlänge kann hierbei von 2, wie beispielsweise Oxalat, bis hin zu Kettenlängen von Oligomeren oder Polymeren gehen. Die Kette des Vernetzers selbst kann aliphatisch oder/und araliphatisch oder/und aromatisch sein und ihrerseits funktionelle Gruppen tragen, die beispielsweise gezielt in die Kette eingebracht wurden, beispielsweise durch ein Verfahren zur Herstellung eines Polykondensationsproduktes, wie oben beschrieben, und die zur Wechselwirkung mit der mindestens einen Templatverbindung oder/und zu einer weiteren Vernetzung geeignet sind, wie dies beispielsweise bei unter anderem Oligoethylenoxid der Fall ist.

In einer ganz besonders bevorzugten Ausführungsform erfolgt der letzte Vemetzungsschritt, der bei der Anpassung der Konformation des polymeren Netzwerkes und der Fixierung der Vorzugskonformation des polymeren Netzwerkes erfolgt, durch ein steifes Vemetzungsreagenz wie beispielsweise Terephthalsäure oder Biphenylcarbonsäure. Selbstverständlich kann diese Vernetzung durch einen steifen Vemetzer sowohl bei in Lösung als auch am Träger hergestellten polymeren Netzwerken erfolgen.

Für die Herstellung des quellfähigen polymeren Netzwerkes werden unter anderem bevorzugt Vemetzungsreagenzien mit flexiblen Ketten mit einer Kettenlänge im Bereich von 4 bis 24 Atomen, besonders bevorzugt von 8 bis 12 Atomen eingesetzt.

Bei Aufbringung einer Schicht mindestens einen Polymers auf das mindestens eine Trägermaterial wird ganz besonders bevorzugt ein Lösungsmittel oder Lösungsmittelgemisch verwendet, in dem das mindestens eine Polymer weitgehend denaturiert, beispielsweise oberhalb des Thetapunktes, vorliegt. Durch diese ganz besonders bevorzugte Ausführungsform wird die Ablagerung einer monomolekularen Schicht des mindestens eines Polymers auf dem mindestens einen Trägermaterial begünstigt. In einer ebenfalls ganz besonders bevorzugten Ausführungsform wird diese Ablagerung monomolekularer Schichten weiterhin durch den gezielten Einsatz von Polymeren mit Molmassen von weniger als 30.000 g/mol gefördert.

Selbstverständlich ist es natürlich auch möglich, in der Nähe des Thetapunktes zu arbeiten, wodurch beispielsweise die Abscheidung von lockeren Polymerknäueln . auf dem mindestens einen Trägermaterial erreicht werden kann. Hinsichtlich dieser Ausführungsform sind Polymere bevorzugt, deren Molmasse im Bereich von ungefähr 30.000 bis ungefähr 100.000 g/mol liegt.

Die Abscheidung kann diesbezüglich auch durch Zugabe mindestens eines schlechten Lösungsmittels oder/und durch Veränderung des pH-Wertes oder/und durch Zugabe von Puffern oder/und Salzen oder/und geeigneten organischen Hilfsstoffen gefördert werden. Ebenso ist es denkbar, die Lösung, in der das mindestens eine Polymer gelöst oder suspendiert vorliegt, einzuengen, wobei in einer besonders bevorzugten Ausführungsform die Konzentration des mindestens einen Polymers in der flüssigen Phase in etwa konstant gehalten wird. Dadurch ist es möglich, das mindestens eine Polymer in etwa quantitativ als Schicht auf dem mindestens einen Trägermaterial aufzubringen.

Was das Verformen der Konformation des mindestens einen Polymers hin zu einer Vorzugskonformation und die anschließende Vernetzung anbelangt, so wird dies im erfindungsgemäßen bei sämtlichen, wie oben geschilderten Verfahrensführungen in Lösung oder am Träger, ganz besonders bevorzugt so durchgeführt, daß, um die Einstellung der Vorzugskonformation des Polymers in Anwesenheit der Templatverbindung zu erreichen, bei hohen Temperaturen, bevorzugt im Bereich von mehr als 50 °C, besonders bevorzugt im Bereich von 60 bis 105 °C und weiter besonders bevorzugt im Bereich von 70 bis 80 °C gearbeitet wird. Selbstverständlich kann dieser Temperaturbereich auf das eingesetzte Lösungsmittel oder Lösungsmittelgemisch abgestimmt werden. In einem weiteren Schritt wird dann bei tiefen Temperaturen, bevorzugt im Bereich von 0 bis -70 °C, das Vernetzungsreagenz zugegeben, wodurch bevorzugt eine statistisch gleichmäßige Verteilung des Vernetzungsreagenzes über das Polymer erreicht wird. Durch geeignete Variation der Reaktionsbedingungen, wie bereits oben beschrieben, wird im Anschluß daran die Reaktion des Polymers mit dem Vernetzungsreagenz induziert.

In einer ebenso bevorzugten Ausführungsform wird das Verfahren hinsichtlich sämtlicher Verfahrensführungen derart durchgeführt, daß beim Aufbringen des Polymers ein Lösungsmittel oder Lösungsmittelgemisch eingesetzt wird, in dem sich das Polymer nahe an der Unlöslichkeitsgrenze befindet, womit der Verteilungskoeffizient für das Aufbringen des Polymers einen günstigen Wert annimmt. Besonders bevorzugt wird das Verfahren so geführt, daß sich das Polymer in der Nähe des Theta-Punktes befindet. In dieser bevorzugten Art der Reaktionsführung wird unter anderem vermieden, daß das Polymer ausfällt.

Das mindestens eine Lösungsmittel wird weiter bevorzugt derart ausgewählt, daß die Wechselwirkungen der Wechselwirkungszellen, wie sie im Rahmen der vorliegenden Erfindung beschrieben sind, mit dem Lösungsmittel weitgehend vernachlässigbar gegenüber den Wechselwirkungen der Wechselwirkungszellen mit der Templatverbindung sind.

Die Verformung in Anwesenheit der Templatverbindung wird weiter bevorzugt in Abhängigkeit von den funktionellen Gruppen, die am Vernetzer oder/und im Polymerstrang oder/und in den Seitenketten des Polymers, die beispielsweise die vorgenannten Wechselwirkungszellen bilden, in Lösungsmittelgemischen definierter Polarität vorgenommen. Insbesondere sind hierbei organische/und oder wäßrige Lösungsmittel geeignet, wobei der pH-Wert der Lösungen weiter bevorzugt im Bereich von 4 bis 9 und insbesondere bevorzugt im Bereich von 6 bis 8 liegt. Als unter anderem bevorzugte Lösungsmittel sind beispielsweise Chlorkohlenwasserstoffe mit bis zu 3 Kohlenstoffatomen wie beispielsweise Chloroform oder Nitrile wie beispielsweise Acetonitril oder Ester wie beispielsweise Essigsäureethylester oder Ketone wie beispielsweise Methylethylketon oder Aceton oder offenkettige oder cyclische Ether wie beispielsweise Methyl-tert-Butylether oder Tetrahydrofuran oder Dioxan oder gegebenenfalls geeignet substituierte Aromaten wie beispielsweise Toluol oder Xylole oder Gemische aus zwei oder mehr davon zu nennen.

In einer besonders bevorzugten Ausführungsform wird gemäß des erfindungsgemäßen Verfahrens die Anpassung der Konformation des Polymers an eine Templatverbindung in einem Lösungsmittelgemisch und bei Reaktionsbedingungen durchgeführt, bei denen das Polymer weitgehend unlöslich, die Templatverbindung dagegen löslich ist.

In einer unter anderem bevorzugten Ausführungsform können sämtliche Verfahrensschritte, einzeln oder in geeigneten Kombination, als kombinatorische Testmethoden durchgeführt werden.

Hierbei ist es beispielsweise denkbar, die Konformation eines Polymers oder einer polymeren Struktur, die beispielsweise bevorzugt auf einen Träger aufgebracht ist, in einer kombinatorischen Testmethode an eine Reihe von unterschiedlichen Templatverbindung anzupassen und die entstehenden Vorzugskonformationen zu vernetzen, wobei dabei jeweils identische Polymere oder polymere Strukturen mit jeweils unterschiedlichen Templatverbindungen in Kontakt gebracht werden.

Ebenso ist es beispielsweise denkbar, identische Templatverbindungen mit einer Reihe von jeweils unterschiedlichen Polymeren oder polymeren Netzwerken umzusetzen und die erhaltenen Vorzugskonformationen beispielsweise zu vernetzen.

Selbstverständlich ist es auch denkbar, Verfahrensschritte bei der Herstellung des polymeren Netzwerkes in kombinatorischen Testmethoden durchzuführen, wobei unter anderem der Träger, das Polymer, beispielsweise hinsichtlich des Derivatisierungsgrades oder/und der Zahl und Art der Rezeptorgruppen, das Vernetzungsreagenz, beispielsweise hinsichtlich der Kettenlänge, der Anzahl oder/und der Art der funktionellen Gruppen, der Vemetzungsgrad im polymeren Netzwerk oder auch die Anzahl der auf den Träger aufgebrachten Schichten variiert werden können.

Weiter bevorzugt können diese kombinatorischen Testmethoden mit einer statistischen Versuchsplanung gekoppelt werden. Solche kombinatorischen oder statistisch-kombinatorischen Methoden können demgemäß auch für die Herstellung der wie oben beschriebenen Polymerderivate, Vernetzungsreagenzien, für die Herstellung eines polymeren Netzwerkes am Träger oder in Lösung oder auch für den Test des polymeren Netzwerkes in Anwendungsgebieten, wie sie beispielsweise untenstehend beschrieben sind, eingesetzt werden.

Besonders geeignet für diese kombinatorischen oder statistisch-kombinatorischen Testmethoden sind unter anderem Durchflußverfahren, wobei auch Varianten wie Automatisierung durch Ventilschaltungen, Reagenzrecycling oder Stop-Flow-Techniken möglich sind. Diese Durchflußverfahren können unter geeigneten Randbedingungen auch für die Produktion größerer Mengen der wie oben beschriebenen Polymerderivate, Vemetzungsreagenzien, polymeren Netzwerke am Träger oder in Lösung eingesetzt werden.

Neben dem Verfahren zur Herstellung des polymeren Netzwerkes betrifft die vorliegende Erfindung auch das polymere Netzwerk selbst, das gemäß einem wie oben beschriebenen Verfahren herstellbar ist.

In einer ebenfalls bevorzugten Ausführungsform werden aus dem erfindungsgemäßen Verfahren polymere Netzwerke in Form von Clustern, Microlatices oder/und Nanopartikeln erhalten. Diese können als echte Lösung, als kolloidale Lösung oder Suspension weiterverarbeitet werden. Insbesondere können diese Cluster, Microlatices oder/und Nanopartikel kovalent oder/und nicht-kovalent zu Schichten, beispielsweise zu Membranen oder Festkörpern vernetzt werden, die beispielsweise porös sein können. Auch diese Vemetzung kann wiederum nach dem erfindungsgemäßen Verfahren erfolgen, wobei durch diese Vernetzung die entstehende Struktur an eine oder mehrere Templatverbindungen angepaßt und fixiert werden kann. Durch gezielte Wahl der Herstellung und der Verfahrensführung, beispielsweise durch Zusatz von beispielsweise geeigneten Porenbildnern, Stabilisatoren, Detergenzien, Schutzkolloiden, geeigneten Lösungsmittelgemischen, durch Art des Rührens, Ultraschallbehandlung oder Partikelerzeugung durch Versprühen, können beispielsweise bevorzugt runde Partikel mit gezielter Porosität hergestellt werden.

Unter anderem sind zwei Methoden zur Herstellung der Cluster, Microlatices oder/und Nanopartikel im Rahmen des erfindungsgemäßen Verfahrens besonders bevorzugt.

In der einen Methode wird ein Polymer hinreichender Molmasse, bevorzugt mit einer Molmasse im Bereich von 30.000 bis 100.000 g/mol, in so hoher Verdünnung oder/und unter solchen weiteren Reaktionsbedingungen vorgelegt, daß das Polymer weitgehend in geknäuelter Form vorliegt. Insbesondere ist hier die Wahl des Lösungsmittels von Bedeutung, die diese geknäuelte Form unterstützt. Unter Zusatz von Vemetzer werden diese Polymerknäuel, gegebenenfalls in Anwesenheit von Templatverbindung, intramolekular vemetzt, ohne daß eine intermolekulare Vernetzung stattfindet. Hierbei werden auch die an der Außenseite der Polymerknäuel liegenden funktionellen Gruppen mit dem Vemetzungsreagenz umgesetzt. Über diese derart aktivierten Außenseiten können dann in einem weiteren Schritt die Nanopartikel intermolekular vemetzt werden, wobei in Abhängigkeit von der Kettenlänge der Vernetzungsreagenzien, über die die Vernetzung erfolgt oder/und in Abhängigkeit von der mindestens einen Templatverbindung, die bei der intermolekularen Vernetzung gegebenenfalls anwesend ist, die Maschenweite der entstehenden Struktur, wie beispielsweise einer porösen Membran, gesteuert werden kann.

In der anderen Methode wird das Verfahren derart durchgeführt, daß die funktionellen Gruppen an der Außenseite des intramolekular vemetzten Polymerknäuels nicht mit Vernetzer abreagiert sind. In einem weiteren Schritt wird die Lösung, die die Polymerknäuel umfaßt, eingeengt, wodurch, bei genügendem Einengen, die Polymerknäuel durch Reaktion der an der Außenseite liegenden funktionellen Gruppen zu dreidimensionalen Strukturen verbacken.

Die erfindungsgemäß hergestellten polymeren Netzwerke weisen im Gegensatz zu den nach dem Stand der Technik hergestellten Imprinting-Phasen beispielsweise den Vorteil einer wesentlich höheren Beladbarkeit auf. Die Beladbarkeit gibt hierbei an, wieviel Gramm eines Substrates pro Gramm des belegten Trägermaterials aufgenommen werden. Dabei sind Werte zwischen 4 und 7 % typisch. Bezüglich der Masse der eigentlich wirksamen Polymerschicht liegt diese Beladbarkeit bereits bei 3 Schichten in der Größenordnung von vorzugsweise 30 bis 50 %. Mit dem Aufbringen weiterer Polymerschichten kann somit die prozentuale Beladbarkeit des belegten Trägermaterials nochmals deutlich erhöht werden.

Während die Imprinting-Phasen eine Beladbarkeit aufweisen, die üblicherweise im Promill-Bereich liegt, ist es nach dem erfindungsgemäßen Verfahren ohne weiteres möglich, polymere Netzwerke herzustellen, die eine Beladbarkeit im Prozent-Bereich aufweisen. Bei der technischen Anwendung der erfindungsgemäß hergestellten Polymere ist damit eine wesentlich höhere Wirtschaftlichkeit zu erzielen.

Prinzipiell können die erfindungsgemäß hergestellten polymeren Netzwerke in sämtlichen geeigneten Verfahren eingesetzt werden. Besonders bevorzugt sind hierbei Verfahren, in denen die mindestens eine Vorzugskonformation ausgenutzt wird, die durch Vernetzung fixiert wird und die an mindestens eine Templatverbindung angepaßt ist. Demgemäß sind als Anwendungsgebiete beispielsweise bevorzugt Stofftrennprozesse wie beispielsweise flüssigchromatographische oder gaschromatographische Verfahren, Membrantrennverfahren, Dialyseverfahren, oder Stoffumwandlungsprozesse wie beispielsweise homogene oder heterogene Katalyse zu nennen.

Weiter können die erfindungsgemäß hergestellten Polymere
- als Assay oder im (Schnell)test in Kombination mit analytischen oder diagnostischen Methoden, Abläufen oder/und Nachweisreagenzien,
- als Träger für Substanzen, die beispielsweise kontrolliert, unter anderem etwa unter definierten Bedingungen freigesetzt werden sollen, wobei hier als Stichwort "drug release" genannt sein soll,
- als Sensor, Indikator oder Detektor auf Oberflächen oder in Hohlräumen, oder
- als Medikament oder Impfstoff zur beispielsweise kompetitiven Hemmung oder Blockierung antigener Gruppen, beispielsweise von Rezeptoren oder Epitopen auf Zellen, Zellbestandteilen, Mikroorganismen, Allergenen, wodurch beispielsweise eine passive Immunisierung erreicht werden kann.

In einer ebenfalls bevorzugten Verwendung wird das erfindungsgemäß hergestellte polymere Netzwerk in Stoffherstellungsprozessen eingesetzt. Als Beispiel hierfür seien unter anderem beispielhaft Reproduktionsprozesse genannt. Dabei können unter Einsatz der erfindungsgemäß hergestellten Polymere Kopien von weitgehend beliebigen (makro)molekularen Vorlagen hergestellt werden und diese wiederum kopiert werden, wobei ein beispielsweise bevorzugt hinsichtlich einer Nanoumgebung isosteres Duplikat der ursprünglichen Vorlage entsteht. Im Rahmen des erfindungsgemäßen Verfahrens können hierbei interessante Rezeptoren einer Vorlage abgetastet werden und dieses Negativ in ein zum Rezeptor isosteres Positiv umzukehren. Daher beschreibt die vorliegende Erfindung auch die Verwendung des erfindungsgemäßen Verfahrens bei Stoffherstellungsprozessen. Im Falle, daß diese Ausführungsform beim Drug Design angewendet wird, kann an dem isosteren Positiv beispielsweise ohne Nebeneffekte ein neuer, pharmakologisch wirksamer Stoff gebunden, getestet oder katalytisch synthetisiert werden. Damit umfaßt die vorliegende Erfindung auch supralithographische Reprotechniken im Nanobereich, deren Produkte dann wiederum beispielsweise für aktive Immunisierungen eingesetzt werden können.

Demgemäß betrifft die vorliegende Erfindung auch die Verwendung eines polymeren Netzwerkes, herstellbar gemäß einem Verfahren wie oben beschrieben, in Stofftrennprozessen, Stoffumwandlungsprozessen, Stoffherstellungsprozessen, Stofferkennungsprozessen oder zur Detektion von Signalen. Hinsichtlich der Signale, die detektiert werden können, sind unter anderem optische, elektrische oder mechanische Signale zu nennen.

Die vorliegende Erfindung wird anhand der folgenden Beispiele näher erläutert.

### Beispiele

### Beispiel 1: Belegung von Kieselgel SP 300-15/30 mit Poly(benzyl-N-allylcarbamat) des Derivatisierungsgrades 14% und anschließende Vernetzung des Polymers mit Dodecandisäure-bis-(N-hydroxy-5-norbornen-2,3-dicarboximid)-ester.

Poly(benzyl-N-allylcarbamat) mit einem Derivatisierungsgrad von 14% (1,60 g) wurde in siedendem Eisessig (100 mL, ca. 117°C) gelöst, nach Abkühlen mit Dichlormethan (100 mL, 1,18 mol) verdünnt und mit Pyridin (112 mL, 1,42 mol) versetzt, um die Löslichkeit des Polymers zu verschlechtem. Im Anschluß wurde die entstandene Trübung mit wenigen Tropfen Eisessig beseitigt. Nach Zugabe von Kieselgel 300 Å, 20 µm (Daisogel SP 300-15/30) (10,02 g) wurde der Ansatz 30 Minuten auf einer Schüttelmaschine bewegt und nach Absaugen über eine Glasfritte mit Dichlormethan (4 × 50 mL) gewaschen.

Zur Vernetzung wurde das belegte Kieselgel zu einer Lösung von Dodecandisäure-bis-(N-hydroxy-5-norbornen-2,3-dicarboximid)-ester (46 mg, 83 µmol) und Triethylamin (36 mg, 0,35 mmol) in Dichlormethan (60 mL) gegeben und die Suspension im Vakuum (85 mbar, Wasserbad 0°C) bis zur Trockene eingeengt. Das belegte Kieselgel wurde mit Tetrahydrofuran (60°C, 4 × 25 mL) gewaschen, abgesaugt und mit Dichlormethan (50 mL) nachgewaschen.

Für die zweite Belegung wurde Poly(benzyl-N-allylcarbamat) mit einem Derivatisierungsgrad von 14% (1,60 g) in siedendem Eisessig (100 mL, ca. 117°C) gelöst, nach Abkühlen mit Dichlormethan (100 mL, 1,18 mol) verdünnt und mit 100 mL Pyridin (100 mL, 1,26 mol) versetzt, um die Löslichkeit des Polymers zu verschlechtem. Anschließend wurden Dimethylaminopyridin (DMAP, 80 mg, 0,65 mmol) und nochmals Pyridin (12 mL, 0,15 mol) zugegeben. Im Anschluß wurde die entstandene Trübung mit wenigen Tropfen Eisessig beseitigt. Nach Zugabe des mit dem Vernetzer, wie oben beschrieben, umgesetzten und belegten Kieselgels wurde der Ansatz 30 Minuten auf einer Schüttelmaschine bewegt und nach Absaugen über eine Glasfritte mit Dichlormethan (4 × 50 mL) gewaschen.

Das belegte Kieselgel wurde wie oben beschrieben wieder vernetzt und dann, entsprechend der zweiten Methode, mit einer dritten Polymerschicht belegt.

Der Ansatz wurde in einer Fritte in Dimethylformamid gequollen (30 min). Durch langsames Durchleiten einer Lösung von Diethylamin (2 mL, 1,42 g, 19,41 mmol) in DMF (40 mL) wurden die verbliebenen aktivierten Vernetzergruppen deaktiviert. Zur vollständigen Deaktivierung wurde der Ansatz noch vier Mal mit der Filtratlösung gespült. Anschließend wurde der Ansatz mit Tetrahydrofuran (60°C, HPLC Grade, 4 × 50 mL) und mit Dichlormethan (4 × 50 mL) gewaschen und trocken gesaugt

Das belegte Kieselgel wurde mit Eisessig (100 mL) versetzt, die Suspension zum Sieden erhitzt, abgesaugt, mit Dichlormethan (5 × 50 mL) gewaschen, getrocknet (110°C, 16 h) und über ein 45 µm Sieb gesiebt.

Die Auswaage betrug 9,4 g.

### Beispiel 2: Polymerverformung und Nachvernetzung

### Erklärung der Verbindungen:

- Kieselgel 300 Å, 20 µm (Daisogel SP 300-15/30), belegt mit 3 Schichten Poly(benzyl-N-allylcarbamat) mit einem Derivatisierungsgrad von 7%, die zu 2% mit Dodecandisäure-bis-(N-hydroxy-5-norbomen-2,3-dicarboximid)-ester vemetzt sind = **(1)**,
- Bernsteinsäure-bis-(N-hydroxy-5-norbomen-2,3-dicarboximid)-ester = **(2)**

Eine mit **(1)** gefüllte Säule wurde mit 0,2 %iger (10,5 mmol/L) 5-Methyl-5-phenylhydantoin Lösung (Substrat) in CHCl₃ und einem Fluß von 0,6 mL/min konditioniert, wobei ca. 40 mg des Substrats auf der Säule adsorbiert wurden. Anschließend wurden 80 µL Eisessig injiziert und der Auslauf in zwei Fraktionen aufgefangen:
1. Fraktion: Von der Injektion bis zum Wiedererreichen der Basislinie nach dem Substrat-Peak (6,1 min).
   In dieser Fraktion waren 18,2 mg Substrat enthalten. Hiervon wurde die in dieser Zeit vom Eluenten eingespülte Substratmenge von 7,32 mg abgezogen, so daß sich für die vom Eisessig ausgespülte Menge ein Wert von 10,9 mg ergab.
2. Fraktion: Vom Wiedererreichen der Basislinie nach dem Substrat-Peak bis zur erneuten Einstellung des vor der Injektion vorhandenen Gleichgewichts (6,1 bis 80 min).
   In dieser Fraktion wurden 72,2 mg Substrat gefunden. Da in dieser Zeit (73,9 min) durch den Eluenten 88,7 mg eingespült worden waren, betrug die von der stationären Phase aufgenommene Substratmenge 16,5 mg.

Nach Beendigung der Injektion wurde die Säule ausgebaut und auf 0°C gekühlt (ca. 30 min).

Zur Herstellung einer Vemetzerlösung wurde (2) (186,2 mg, 0,423' mmol) in 19,24 mL 0,2%iger (10,5 mmol/L) 5-Methyl-5-phenylhydantoinlösung aufgelöst und Triethylamin (0,76 mL) zugeben. Aus einem auf 0°C gekühltem Vorratsgefäß wurde diese Lösung in das System (ohne Säule) eingespült.

Nach Basislinienkonstanz wurde die Säule wieder in das System eingebaut, so daß sie dabei weiterhin auf 0°C gekühlt blieb. Die Vernetzerlösung wurde mit 5 mL/min in die Säule eingespült. Nach dem Durchbruch der Vernetzerfront (UV 265 nm) wurde der Fluß abgestellt.

Die Säule wurde wieder ausgebaut, 30 min weiterhin auf 0°C gekühlt und anschließend in einen Säulenthermostat (120 min, 25°C) gelegt.

Das System (ohne Säule) wurde mit Tetrahydrofuran gespült, die Säule nach 120 min Reaktionszeit wieder in das System eingebaut und mit 50 mL Tetrahydrofuran gespült (1 mL/min).

Zum Deaktivieren der noch verbliebenen freien (N-Oxy-5-norbornen-2,3-dicarboximid)-Gruppen des Vernetzers wurde Diethylamin (40,2 mg, 0,55 mmol) (5 Äquivalente bezogen auf maximal entstehendes N-Hydroxy-5-norbomen-2,3-dicarboximid) in Tetrahydrofuran (20 mL) gelöst (Quenchlösung), in die Säule eingespült (1 mL/min), die Lösung aus dem Säulenauslauf 5 h wieder in die Säule eingespült und dann auf Tetrahydrofuran umgeschaltet. Nach Basislinienkonstanz wurde die Pumpe angehalten, der Säulenthermostat auf 50°C gestellt und für 30 min diese Temperatur gehalten. Anschließend wurde das Tetrahydrofuran mit 1 mL/min weiter gepumpt, bis reines Tetrahydrofuran eluiert wurde.

## Patentansprüche

1. Verfahren zur Herstellung eines polymeren Netzwerkes, in dem
(i) ein oder mehrere Polymere bereitgestellt werden, die intramolekular oder intermolekular oder intra- und intermolekular durch kovalente oder nicht-kovalente Bindung miteinander vernetzt werden können,
(ii) die Konformation mindestens eines der Polymere an mindestens eine Templatverbindung unter Erhalt mindestens einer Vorzugskonformation des mindestens einen Polymers angepaßt wird,
(iii) mindestens eine der gemäß (ii) erhaltenen Vorzugskonformationen durch Vernetzung fixiert wird.

2. Verfahren nach Anspruch 1, **dadurch gekennzeichnet, daß** die Anpassung gemäß (ii) in Anwesenheit mindestens einer der Templatverbindungen durchgeführt wird.

3. Verfahren nach Anspruch 1 oder 2, **dadurch gekennzeichnet, daß** die Anpassung der Konformation des mindestens einen Polymers in mindestens zwei Schritten erfolgt.

4. Verfahren nach Anspruch 3, **dadurch gekennzeichnet, daß** nach jedem Schritt die aus diesem Schritt erhaltene Vorzugskonformation durch Vernetzung fixiert wird.

5. Verfahren nach Anspruch 3 oder 4, **dadurch gekennzeichnet, daß** mindestens ein Schritt in Abwesenheit der mindestens einen Templatverbindung durchgeführt wird.

6. Verfahren nach einem der Ansprüche 1 bis 5, **dadurch gekennzeichnet, daß** das polymere Netzwerk auf mindestens einem Trägermaterial hergestellt wird.

7. Verfahren nach Anspruch 6, **dadurch gekennzeichnet, daß** das mindestens eine Polymer in mindestens zwei aufeinander folgenden Schritten schichtweise auf das mindestens eine Trägermaterial aufgebracht wird

8. Verfahren nach Anspruch 7, **dadurch gekennzeichnet, daß** die schichtweise Aufbringung zu einem primärvemetzten polymeren Netzwerk führt, das eine Konformation aufweist, die in mindestens einem weiteren Schritt in Anwesenheit der mindestens einen Templatverbindung an die mindestens eine Templatverbindung angepaßt und durch Vernetzung fixiert wird.

9. Polymeres Netzwerk, herstellbar gemäß einem der Ansprüche 1 bis 8.

10. Verwendung eines polymeren Netzwerkes, herstellbar gemäß einem der Ansprüche 1 bis 8, in Stofftrennprozessen, Stoffumwandlungsprozessen, Stoffherstellungsprozessen, Stofferkennungsprozessen oder zur Detektion von Signalen.

## Claims

1. Process for the preparation of a polymeric network, in which
(i) one or more polymers are made available which can be crosslinked with one another intramolecularly or intermolecularly or intra- and intermolecularly by covalent or non-covalent bonding,
(ii) the conformation of at least one of the polymers is adapted to at least one template compound with obtainment of at least one preferred conformation of the at least one polymer,
(iii) at least one of the preferred conformations obtained according to (ii) is fixed by crosslinkage.

2. Process according to Claim 1, **characterized in that** the adaptation according to (ii) is carried out in the presence of at least one of the template compounds.

3. Process according to Claim 1 or 2, **characterized in that** the adaptation of the conformation of the at least one polymer takes place in at least two steps.

4. Process according to Claim 3, **characterized in that** after each step the preferred conformation obtained from this step is fixed by crosslinkage.

5. Process according to Claim 3 or 4, **characterized in that** at least one step is carried out in the absence of the at least one template compound.

6. Process according to one of Claims 1 to 5, **characterized in that** the polymeric network is prepared on at least one support material.

7. Process according to Claim 6, **characterized in that** the at least one polymer is applied to the at least one support material in layers in at least two successive steps.

8. Process according to Claim 7, **characterized in that** the application in layers leads to a primarily crosslinked polymer network which has a conformation which is adapted to the at least one template compound in at least one further step in the presence of the at least one template compound and is fixed by crosslinkage.

9. Polymeric network, preparable according to one of Claims 1 to 8.

10. Use of a polymeric network, preparable according to one of Claims 1 to 8, in substance separation processes, substance conversion processes, substance preparation processes, substance recognition processes or for the detection of signals.

## Revendications

1. Procédé pour la préparation d'un réseau polymère, dans lequel
(i) on prépare un ou plusieurs polymères qui peuvent être réticulés ensemble de manière intramoléculaire ou intermoléculaire ou intra- et inter-moléculaire par des liaisons covalentes ou non covalentes,
(ii) on adapte la conformation d'au moins un des polymères sur au moins un composé modèle en obtenant au moins une conformation préférentielle du au moins un polymère,
(iii) on fixe au moins une des conformations préférentielles obtenues selon (ii) par réticulation.

2. Procédé selon la revendication 1, **caractérisé en ce que** l'on réalise l'adaptation selon (ii) en présence d'au moins un des composés modèles.

3. Procédé selon la revendication 1 ou 2, **caractérisé en ce que** l'on réalise l'adaptation de la conformation du au moins un polymère en au moins deux étapes.

4. Procédé selon la revendication 3, **caractérisé en ce qu'**après chaque étape on fixe la conformation préférentielle obtenue dans cette étape par réticulation.

5. Procédé selon la revendication 3 ou 4, **caractérisé en ce que** l'on réalise au moins une étape en l'absence du au moins un composé modèle.

6. Procédé selon l'une quelconque des revendications 1 à 5, **caractérisé en ce que** le réseau polymère est préparé sur au moins un matériau de support.

7. Procédé selon la revendication 6, **caractérisé en ce que** l'on applique le au moins un polymère en au moins deux étapes successives en couche sur le au moins un matériau de support.

8. Procédé selon la revendication 7, **caractérisé en ce que** l'application en couche produit un réseau polymère réticulé de manière primaire, lequel présente une conformation qui est adaptée dans au moins une étape supplémentaire en présence du au moins un composé modèle sur le au moins un composé modèle et est fixé par réticulation.

9. Réseau polymère pouvant être préparé selon l'une quelconque des revendications 1 à 8.

10. Utilisation d'un réseau polymère pouvant être préparé selon une des revendications 1 à 8 dans des procédés de séparation de matières, des procédés de transformation de matières, des procédés de préparation de matières, des procédés de caractérisation de matières ou pour la détection de signaux.
